# EUROPÄISCHE PATENTANMELDUNG

(11) **EP 4 763 479 A1**
(43) Veröffentlichungstag der Anmeldung: **24.06.2026**
(21) Anmeldenummer: 24222351.9
(22) Anmeldetag: 20.12.2024
(51) Int. Cl.: B29C 64/129, A61C 13/00, B29C 64/336, B29C 64/393, B33Y 10/00, B33Y 40/00, B33Y 50/02

(54) **VORRICHTUNG UND VERFAHREN ZUM SCHICHTWEISEN HERSTELLEN EINES BAUTEILS, INSBESONDERE EINER DENTALRESTAURATION**

(71) Anmelder: Ivoclar Vivadent AG, 9494 Schaan (LI)
(72) Erfinder: Bitar, Nicola, 9462 Montlingen (CH); Ebert, Jörg, 9470 Buchs (CH); Häfele, Clemens, 6800 Feldkirch (AT); Reinhardt, Jonas, 7206 Igis (CH)
(74) Vertreter: Maiwald GmbH

(57) **Zusammenfassung**

Es wird eine Vorrichtung (10) zum schichtweisen Herstellen eines Bauteils (12), insbesondere einer Dentalrestauration (14), beschrieben. Wenigstens eine Bauteilschicht des Bauteils (12) umfasst sowohl ein erstes Material (M1), als auch ein zweites Material (M2). Alternativ ist wenigstens eine Bauteilschicht aus dem ersten Material (M1) hergestellt und eine daran angrenzende weitere Bauteilschicht aus dem zweiten Material (M2). Die Vorrichtung (10) umfasst einen Bauraum (20), der durch eine bewegungsantreibbare Bauplattform (24) und eine Aushärteeinheit (28) begrenzt ist, wobei die Aushärteeinheit (28) dazu ausgebildet ist, im Bauraum (20) vorliegendes erstes Material (M1) und/oder zweites Material (M2) auszuhärten. Ferner umfasst die Vorrichtung (10) einen ersten Behälter (30) für erstes Material (M1), eine erste Fördereinheit (34) zum Fördern von erstem Material (M1) in den Bauraum (20), einen zweiten Behälter (44) für zweites Material (M2), und eine zweite Fördereinheit (48) zum Fördern von zweitem Material (M2) in den Bauraum (20). Die erste Fördereinheit (34) und die zweite Fördereinheit (48) sind zumindest zeitweise invers bewegungsgekoppelt, wobei die Bewegungskopplung mechanisch und/oder steuerungstechnisch ist. Ferner werden Verfahren zum schichtweisen Herstellen eines Bauteils (12) vorgestellt.

## Beschreibung

Die Erfindung betrifft eine Vorrichtung zum schichtweisen Herstellen eines Bauteils, insbesondere einer Dentalrestauration.

Ferner ist die Erfindung auf Verfahren zum schichtweisen Herstellen eines Bauteils, insbesondere einer Dentalrestauration, gerichtet
Derartige Verfahren und Vorrichtungen zum schichtweisen Herstellen von Bauteilen sind für sich genommen bekannt. Dabei wird im Zuge derartiger Verfahren das herzustellende Bauteil Schicht für Schicht auf einem Substrat oder auf einer Bauplattform aufgebaut. Oft kann dabei das Substrat oder die Bauplattform inkrementell verfahren werden, wobei ein Inkrement einer Schichtdicke oder Schichthöhe der herzustellenden Bauteilschicht entspricht. Teilweise werden für die Schichthöhe oder Schichtdicke auch die Begriffe Schichtstärke, Layerhöhe oder Layerdicke verwendet. Die Verfahrbarkeit des Substrats oder der Bauplattform erfolgt dabei häufig in einer vertikalen Richtung, die manchmal als Z-Richtung bezeichnet werden. Ein Inkrement kann somit auch als Z-Auflösung oder vertikale Auflösung bezeichnet werden. Man spricht in diesem Zusammenhang auch von additiver oder generativer Fertigung. Teilweise werden solche Verfahren auch als 3D-Druck bezeichnet. Die Dentaltechnik ist ein Anwendungsbereich für solche Verfahren. Insbesondere können dabei Ersatzzähne oder diese umfassende Teil- oder Vollprothesen schichtweise hergestellt werden. Dasselbe gilt für Teile von Ersatzzähnen. Allgemeiner gesprochen können Dentalrestaurationen schichtweise hergestellt werden. Dabei wird stets angestrebt, dass die Dentalrestauration möglichst originalgetreu aussieht, sich also optisch von natürlichen Zähnen und/oder natürlichem Zahnfleisch möglichst wenig unterscheidet.

Die Aufgabe der vorliegenden Erfindung liegt daher darin, die Originaltreue von schichtweise hergestellten Dentalrestaurationen weiter zu verbessern, d. h. die Herstellung von Dentalrestaurationen mit einem natürlich wirkenden Erscheinungsbild zu ermöglichen. Mit anderen Worten soll eine Möglichkeit geschaffen werden, Dentalrestaurationen herzustellen, die natürlichen Zähnen und/oder natürlichem Zahnfleisch möglichst nahekommen.

Die Aufgabe wird durch eine Vorrichtung zum schichtweisen Herstellen eines Bauteils, insbesondere einer Dentalrestauration, gelöst. Dabei umfasst wenigstens eine Bauteilschicht des Bauteils sowohl ein erstes Material als auch ein zweites Material. Alternativ ist wenigstens eine Bauteilschicht aus dem ersten Material hergestellt und eine daran angrenzende weitere Bauteilschicht aus dem zweiten Material hergestellt. Die Vorrichtung umfasst einen Bauraum, der durch eine bewegungsantreibbare Bauplattform und eine der Bauplattform gegenüberliegende Aushärteeinheit begrenzt ist, wobei die Aushärteeinheit dazu ausgebildet ist, im Bauraum vorliegendes erstes Material und/oder zweites Material auszuhärten. Ferner umfasst die Vorrichtung einen ersten Behälter für erstes Material, der materialleitend mit dem Bauraum verbunden ist. Auch umfasst die Vorrichtung eine erste Fördereinheit zum Fördern von erstem Material aus dem ersten Behälter in den Bauraum. Außerdem umfasst die Vorrichtung einen zweiten Behälter für zweites Material, der materialleitend mit dem Bauraum verbunden ist. Die Vorrichtung umfasst ferner eine zweite Fördereinheit zum Fördern von zweitem Material aus dem zweiten Behälter in den Bauraum. Dabei sind die erste Fördereinheit und die zweite Fördereinheit zumindest zeitweise invers bewegungsgekoppelt. Die Bewegungskopplung ist mechanisch und/oder steuerungstechnisch.

Die erfindungsgemäße Vorrichtung ist also einerseits dazu geeignet und ausgebildet, ein Bauteil, insbesondere eine Dentalrestauration, schichtweise herzustellen, wobei wenigstens eine Bauteilschicht des Bauteils sowohl ein erstes Material als auch ein zweites Material umfasst. Das schließt zwei Alternativen ein. Gemäß einer ersten Alternative sind das erste Material und das zweite Material innerhalb der Bauteilschicht gemischt. Gemäß einer zweiten Alternative umfasst die Bauteilschicht sowohl das erste Material als auch das zweite Material, das erste Material und das zweite Material sind jedoch unvermischt. Andererseits ist die erfindungsgemäße Vorrichtung dazu geeignet und ausgebildet, ein Bauteil, insbesondere eine Dentalrestauration, schichtweise herzustellen, wobei das Bauteil aneinander angrenzende Bauteilschichten aus unterschiedlichen Materialien umfasst, d. h. wobei wenigstens eine Bauteilschicht aus erstem Material an eine weitere Bauteilschicht aus zweitem Material angrenzt. In der erfindungsgemäßen Vorrichtung kann ein herzustellendes Bauteil schichtweise auf der Bauplattform aufgebaut werden. Hierfür wird mittels der ersten Fördereinheit ein erstes Material aus dem ersten Behälter in den Bauraum gefördert. Alternativ oder zusätzlich wird mittels der zweiten Fördereinheit ein zweites Material aus dem zweiten Behälter in den Bauraum gefördert. Dabei wird mittels der Aushärteeinheit jeweils eine Bauteilschicht aus erstem Material und/oder zweitem Material im Bauraum ausgehärtet. Aufgrund der Tatsache, dass die Bauplattform bewegungsantreibbar ist, lässt sich die Bauplattform nach dem Herstellen einer Bauteilschicht jeweils um ein Inkrement verschieben, sodass die nachfolgende Bauteilschicht hergestellt werden kann. Dabei beträgt das Inkrement zum Beispiel 50 bis 100 Mikrometer. Die oben beschriebene Eignung der Vorrichtung zur Herstellung von Bauteilschichten, die sowohl das erste Material als auch das zweite Material umfassen, sowie zur Herstellung von aneinander angrenzende Bauteilschichten aus unterschiedlichen Materialien ergibt sich dabei dadurch, dass die erste Fördereinheit und die zweite Fördereinheit zumindest zeitweise invers bewegungsgekoppelt sind. Das bedeutet, dass zumindest zeitweise eine Förderrichtung der ersten Fördereinheit und eine Förderrichtung der zweiten Fördereinheit einander entgegengesetzt orientiert sind. Das schließt eine erste Alternative ein, in der die Förderrichtung der ersten Fördereinheit in Richtung des Bauraums orientiert ist, also erstes Material in Richtung des Bauraums gefördert wird, und die Förderrichtung der zweiten Fördereinheit in eine vom Bauraum weg weisende Richtung orientiert ist, also zweites Material aus dem Bauraum heraus gefördert wird oder zumindest ein Fördern des zweiten Materials aus dem Bauraum heraus freigegeben, d. h. ermöglicht, ist. Ebenso schließt dies eine zweite Alternative ein, in der die Förderrichtung der ersten Fördereinheit in eine vom Bauraum weg weisende Richtung orientiert ist und die Förderrichtung der zweiten Fördereinheit in Richtung des Bauraums orientiert ist. Die Bewegungskopplung der ersten Fördereinheit und der zweiten Fördereinheit bewirkt dabei, dass ein Hineinfördern von erstem Material in den Bauraum und ein Hinausfördern von zweitem Material aus dem Bauraum in einem vorgegebenen Verhältnis stehen. Dasselbe gilt, wenn zweites Material in den Bauraum hinein gefördert wird und erstes Material aus dem Bauraum hinaus gefördert wird. Beispielsweise wird so durch die Bewegungskopplung erreicht, dass ein Volumeninkrement aus erstem oder zweitem Material, das in den Bauraum hinein gefördert wird, einem Volumeninkrement des jeweils anderen aus erstem und zweitem Material entspricht, das aus dem Bauraum hinaus gefördert wird. Auf diese Weise lässt sich einerseits das zu einer Bauteilschicht zu verarbeitende Material im Bauraum tauschen. D. h., es kann erstes Material, das im Bauraum vorliegt, durch zweites Material ersetzt werden und umgekehrt. Es versteht sich dabei, dass hierzu das erste Material und das zweite Material im unausgehärtet Zustand vorliegen müssen. Darüber hinaus wird durch die wenigstens zeitweise inverse Bewegungskopplung erreicht, dass sowohl erstes Material als auch zweites Material im Bauraum, d. h. in einer herzustellenden Bauteilschicht, vorliegen kann. Dabei können das erste Material und das zweite Material gemischt sein. Alternativ ist jedoch auch denkbar, dass das erste Material und das zweite Material nebeneinander vorliegen, ohne gemischt zu sein. Folglich lassen sich mittels der erfindungsgemäßen Vorrichtung originalgetreue Dentalrestaurationen herstellen. Das betrifft insbesondere drei Arten der Herstellung originalgetreuer Dentalrestaurationen. Einerseits lässt sich die Originalgetreue dadurch steigern, dass das erste Material und das zweite Material gemischt werden. Darüber hinaus lässt sich durch das unvermischte Nebeneinanderordnen von erstem Material und zweitem Material in derselben Bauteilschicht die Dentalrestauration nach dem sogenannten Kern-Schale-Prinzip herstellen, wobei ein Kernbereich der Dentalrestauration, der das Dentin eines echten Zahnes nachbildet, aus einem anderen Material hergestellt wird als ein den Kernbereich zumindest abschnittsweise umgebender Schalenbereich, der einen Schmelz eines echten Zahns nachbildet. Darüber hinaus lässt sich auch eine originalgetreue Dentalrestauration herstellen, indem Bauteilschichten aus unterschiedlichen Materialien oder unterschiedlich eingefärbten Materialien nebeneinander angeordnet werden.

Es wird bemerkt, dass bei der erfindungsgemäßen Vorrichtung die Tatsache, dass die Bauplattform bewegungsantreibbar ist, insbesondere auch bedeutet, dass die Bauplattform bewegungslos gehalten werden kann. Mit anderen Worten kann die Bauplattform festgestellt oder fixiert werden. Das ist insbesondere in Situationen vorteilhaft, in denen das erste Material im Bauraum durch zweites Material ausgetauscht werden soll oder umgekehrt. Wenn die Bauplattform sich nicht bewegt, lässt sich nämlich mit besonders hoher Effizienz eines aus erstem Material und zweitem Material aus dem Bauraum entfernen und das jeweils andere aus erstem Material und zweitem Material in den Bauraum einbringen. Dasselbe gilt für Situationen, in denen eine im Bauraum befindliche Mischung aus erstem Material und zweitem Material verändert werden soll.

Im Zusammenhang mit der vorliegenden Erfindung sind das erste Material und das zweite Material unterschiedlich. Das bedeutet, dass sich das erste Material und das zweite Material zumindest hinsichtlich einer Materialeigenschaft unterscheiden. Dabei ist es ebenso möglich, dass sich das erste Material und das zweite Material hinsichtlich mehrerer Materialeigenschaften unterscheiden. Beispielhafte Materialeigenschaften sind Farbe, Verfärbungsstabilität, Transluzenz, Opazität, Opaleszenz, Glanzstabilität, Farbhelligkeit, Fluoreszenz, Verschleißfestigkeit, Abrasionsgrad, Härte, Bruchfestigkeit, sowie weitere klinisch relevante Parameter und/oder Materialverhalten der Materialien im unausgehärteten, d.h. noch nicht polymerisierten, Zustand, wie rheologisches Verhalten, z. B. Viskosität, oder das rheologische Verhalten beeinflussende Parameter wie z. B. Füllgrad etc. Diese Materialeigenschaften betreffen insbesondere polymerisierte, d.h. ausgehärtete, (Teil-)Bereiche des ersten Materials und/oder des zweiten Materials. Folglich kann durch die geschickte Auswahl von erstem Material und zweitem Material, insbesondere durch geschickte Auswahl derjenigen Materialeigenschaften, hinsichtlich derer sich das erste Material und das zweite Material unterscheiden kann, die Originaltreue der Dentalrestauration weiter gesteigert werden.

Ferner müssen im Zusammenhang mit der vorliegenden Erfindung das erste Material und das zweite Material fließfähig sein. Insbesondere sind dabei das erste Material und das zweite Material Flüssigkeiten, wobei sich eine Viskosität des ersten Materials und eine Viskosität des zweiten Materials jeweils über einen weiten Viskositätsbereich erstrecken kann. Dabei können die Viskosität des ersten Materials und die Viskosität des zweiten Materials im Wesentlichen gleich, ähnlich oder unterschiedlich sein.

In einer Variante kann eine Viskosität des ersten Materials und eine Viskosität des zweiten Materials im Bereich von flüssigem Wasser, d.h. im Bereich von 1,0 mPa*s bis 100 mPa*s betragen, wobei eine Temperatur von 23°C unterstellt wird.

Üblicherweise wird die Viskosität bei 23°C, d.h. bei Raumtemperatur, mit einem Platten-Platten-Viskosimeter bestimmt (Scherrate 10/s).

Der Bereich der Viskosität kann zum Beispiel durch ein Intervall von +/- 10% oder +/- 5% gekennzeichnet sein.

In einer anderen Variante können das erste Material und das zweite Material pastenförmig sein, d.h. bei einer Temperatur von 23°C eine deutlich höhere Viskosität als flüssiges Wasser aufweisen. Optional ist es dabei denkbar, das erste Material und/oder das zweite Material aufzuheizen, um die Viskosität zu senken.

Materialen zur stereolithographischen Verarbeitung werden vorzugsweise so eingestellt, dass ihre Viskosität, abhängig von der Materialtemperatur während des Verarbeitungsprozesses, im Bereich von 100 mPa*s bis 100 Pa*s, bevorzugt 250 mPa*s bis 50 Pa*s, besonders bevorzugt 500 mPa*s bis 49 Pa*s, liegt. Die Materialtemperatur während des Verarbeitungsprozesses liegt vorzugsweise im Bereich von 10°C bis 70°C, besonders bevorzugt 20°C bis 65°C oder 30°C bis 60°C.

In einem bevorzugten Beispiel sind eine Viskosität des ersten Materials und eine Viskosität des zweiten Materials ähnlich. In diesem Zusammenhang kann sich eine Viskosität des ersten Materials um +/-10% oder weniger von der Viskosität des zweiten Materials unterscheiden oder umgekehrt. Alternativ ist es auch möglich, wie bereits erwähnt, die Viskosität des ersten Materials und die Viskosität des zweiten Materials unterschiedlich zu wählen, d.h. ein niedrigviskoses Material und ein hochviskoses Material zu verarbeiten. Dabei können sich die Viskositäten um mehrere Faktoren unterscheiden. In diesem Zusammenhang können Materialien mit unterschiedlichen Viskositäten durch Vorsehen von unterschiedlichen Füllstoffgehalten und/oder Formulierungseigenschaften erhalten werden.

Allgemein lässt sich festhalten, dass die rheologischen Eigenschaften der zu verarbeitenden Materialien stets an den gewünschten Anwendungszweck angepasst werden.

Die erfindungsgemäße Vorrichtung ist insbesondere dazu ausgebildet, ein StereolithografieVerfahren auszuführen. In diesem Fall umfasst die Aushärteeinheit eine Belichtungseinheit, die wiederum beispielsweise einen Laser umfasst. Andere Beispiele von Belichtungseinheiten weisen ein LCD (Liquid Crystal Display) oder einen Projektor, insbesondere einen sogenannten Digital Light Projector, auf, sodass eine präzise, insbesondere pixelweise, Belichtung möglich ist. Folglich kann mittels der Aushärteeinheit durch Belichten von im Bauraum vorliegendem erstem Material und/oder zweitem Material das erste Material und/oder das zweite Material ausgehärtet werden, insbesondere durch sogenannte Fotopolymerisation. Hierzu kann der Bauraum einen transparenten Wandabschnitt, z. B. in Form eines Belichtungsfensters, aufweisen.

In einem Beispiel ist eine Innenseite des Bauraums mit Silikon, Polytetrafluorethylen (PTFE) und/oder Polydimethylsiloxan (PDMS) beschichtet.

Es versteht sich, dass auch wenn die erfindungsgemäße Vorrichtung anhand ihrer Eignung für die Herstellung wenigstens einer Bauteilschicht, die sowohl ein erstes Material als auch ein zweites Material umfasst, erläutert wurde, es auch möglich ist, mittels der erfindungsgemäßen Vorrichtung Bauteile, insbesondere Dentalrestaurationen, herzustellen, die mehrere derartige Bauteilschichten umfassen. Insbesondere können mittels der erfindungsgemäßen Vorrichtung Bauteile hergestellt werden, deren Mehrheit an Bauteilschichten sowohl ein erstes Material als auch ein zweites Material umfasst. Gleiches gilt für die Herstellung von Bauteilen mittels der erfindungsgemäßen Vorrichtung, wobei wenigstens eine Bauteilschicht aus dem ersten Material hergestellt ist und wenigstens eine weitere, daran angrenzende Bauteilschicht aus dem zweiten Material hergestellt ist. Das bedeutet, dass mittels der erfindungsgemäßen Vorrichtung auch Bauteile hergestellt werden können, die mehrere derartige Paare an aneinander angrenzenden Bauteilschichten umfassen, welche aus unterschiedlichen Materialien hergestellt sind.

Die Vorrichtung kann ferner eine Mischkontur zum Mischen des ersten Materials und/oder des zweiten Materials umfassen, wobei die Mischkontur innerhalb des Bauraums oder angrenzend an den Bauraum angeordnet ist. Alternativ kann die Mischkontur auch als Mischkulisse oder Mischstruktur bezeichnet werden. Dies umfasst drei Alternativen. Gemäß einer ersten Alternative ist die Mischkontur zum Mischen des ersten Materials ausgebildet. Das bedeutet, dass mittels der Mischkontur das erste Material in sich gemischt werden kann. Auf diese Weise lässt sich das erste Material homogenisieren. Gemäß einer zweiten Alternative ist die Mischkontur zum Mischen des zweiten Materials ausgebildet. Das bedeutet, dass mittels der Mischkontur das zweite Material in sich gemischt werden kann. Auf diese Weise lässt sich das zweite Material Homogenisierung. Gemäß einer dritten Alternative ist die Mischkontur zum Mischen des ersten Materials mit dem zweiten Materialart ausgebildet. In dieser Alternative bewirkt die Mischkontur eine zuverlässige und gleichmäßige Vermischung des ersten Materials und des zweiten Materials. Das Mischen setzt stets eine Fließfähigkeit der Materialien voraus. Dabei wird durch die Mischkontur lokal eine Fließgeschwindigkeit des Materials erhöht. Auf diese Weise entstehen unterschiedliche Fließgeschwindigkeiten innerhalb des Materials, die letztendlich das Mischen bewirken. Das Vorsehen des ersten Materials in homogenisierter Form, des zweiten Materials in homogenisierter Form oder der Mischung aus erstem und zweitem Material in homogenisierter Form führt zu homogenen Bauteilschichten und damit zu einer originalgetreuen Dentalrestauration.

Auch ist es möglich, dass die Vorrichtung ein Trennelement zum Getrennthalten von erstem Material und zweitem Material umfasst. Ein derartiges Trennelement kommt insbesondere dann zum Einsatz, wenn eine Mischung aus erstem Material und zweitem Material unerwünscht ist, d. h. wenn jeder Abschnitt des herzustellenden Bauteils aus nur einem aus erstem Material und zweitem Material hergestellt werden soll. Das Trennelement kann in diesem Zusammenhang in Form eines Schiebers oder eines Trennbalkens vorgesehen sein, der zwischen dem ersten Material und dem zweiten Material angeordnet ist, sodass das erste Material und das zweite Material keine gemeinsame Grenzschicht aufweisen. Dabei lässt sich das Trennelement vorzugsweise bewegen. Das Trennelement kann also sowohl innerhalb des Bauraums bewegt werden als auch wahlweise in den Bauraum hineingefahren und aus dem Bauraum herausgefahren werden. Um das Trennelement in den Bauraum hineinzufahren, kann es notwendig sein die Bauplattform in eine geeignete Stellung zu bewegen, sodass eine Kollision zwischen dem Trennelement und bereits hergestellten Bauteilabschnitten ausgeschlossen werden kann. Insgesamt lässt sich dabei mittels des Trennelements das erste Material und das zweite Material zuverlässig getrennt halten. Dadurch werden unerwünschte Mischungen aus erstem Material und zweitem Material zuverlässig verhindert. Dadurch lassen sich Dentalrestaurationen von hoher Qualität herstellen.

In einem Beispiel ist das Trennelement beweglich zwischen dem ersten Material und dem zweiten Material gelagert. Dabei lässt sich das Trennelement mittels erstem Material und/oder mittels zweitem Material antreiben. Das bedeutet, dass das Trennelement durch das Fördern von erstem Material in den Bauraum mittels der ersten Fördereinheit indirekt bewegt werden kann. Alternativ kann das Trennelement durch Fördern von zweitem Material in den Bauraum mittels der zweiten Fördereinheit indirekt bewegt werden. Auf diese Weise lässt sich das Trennelement einfach und zuverlässig bewegen.

Gemäß einer Ausführungsform ist der erste Behälter durch einen Innenraum eines Zylinders gebildet. Zudem umfasst die erste Fördereinheit einen Kolben, der zumindest abschnittsweise im Innenraum des Zylinders aufgenommen und im Innenraum verschiebbar ist. Alternativ oder zusätzlich ist der zweite Behälter durch einen Innenraum eines Zylinders gebildet. Zudem umfasst die zweite Fördereinheit einen Kolben, der zumindest abschnittsweise im Innenraum des Zylinders aufgenommen und im Innenraum verschiebbar ist. In einer derartigen Konfiguration können der als Zylinder ausgebildete Behälter und ein zugeordneter Kolben auch als Kartusche bezeichnet werden. Insbesondere schließt der Begriff "Kartusche" auch darin enthaltenes Material mit ein. Ein derartiger Aufbau der Behälter und Fördereinheiten ist strukturell einfach. Ferner bewirkt eine derartige Kombination von Behälter und Fördereinheit, dass das zugeordnete Material mit hoher Präzision und Zuverlässigkeit gefördert werden kann.

Die Bewegungskopplung kann hydromechanisch über das erste Material und/oder über das zweite Material sein. Alternativ können die erste Fördereinheit und die zweite Fördereinheit mechanisch gekoppelt sein. Gemäß einer weiteren Alternative können die erste Fördereinheit und die zweite Fördereinheit mechanisch separat voneinander sein und steuerungstechnisch gekoppelt sein. Wie bereits zuvor erläutert, muss die Bewegungskopplung invers sein. Die Fördererrichtungen der ersten Fördereinheit und der zweiten Fördereinheit sind also entgegengesetzt orientiert. In der ersten Alternative erfolgt dies dadurch, dass die erste Fördereinheit und die zweite Fördereinheit hydromechanisch, genauer gesagt hydrostatisch, über das erste Material und das zweite Material gekoppelt sind. Dies ist besonders leicht verständlich, wenn sowohl die erste Fördereinheit als auch die zweite Fördereinheit, wie bereits erläutert, als Kolben ausgebildet sind. Sofern ein Raum zwischen dem die erste Fördereinheit bildenden Kolben und dem die zweite Fördereinheit bildenden Kolben mit erstem Material und zweitem Material im Wesentlichen luftfrei gefüllt ist, bewirkt ein Bewegen eines der Kolben in Richtung zum Bauraum, dass sich der jeweils andere Kolben aufgrund der hydromechanischen Kopplung vom Bauraum entfernt. Bei der hydromechanischen Bewegungskopplung reicht es also aus, eine der Fördereinheiten aktiv zu bewegen und die jeweils andere Fördereinheit zum passiven Bewegt werden freizugeben. Eine Kopplung der ersten Fördereinheit und der zweiten Fördereinheit außerhalb des ersten Materials und/oder des zweiten Materials ist bei der hydromechanischen Bewegungskopplung nicht nötig. Somit kann eine Vorrichtung, die eine hydromechanischen Bewegungskopplung nutzt, strukturell einfach aufgebaut sein. In der zweiten Alternative sind die erste Fördereinheit und die zweite Fördereinheit mechanisch gekoppelt. Diese Kopplung wird außerhalb des ersten Materials und des zweiten Materials bewirkt. Das bedeutet, dass in dieser Alternative die erste Fördereinheit und die zweite Fördereinheit durch mechanische Bauteile, beispielsweise Schubstangen, Zahnräder etc. invers bewegungsgekoppelt sind. Auf diese Weise lässt sich eine zuverlässige Bewegungskopplung der ersten Fördereinheit und der zweiten Fördereinheit realisieren. In der dritten Alternative sind die erste Fördereinheit und die zweite Fördereinheit mechanisch separat voneinander. Allerdings sind die erste Fördereinheit und die zweite Fördereinheit steuerungstechnisch gekoppelt. Das impliziert, dass jeder aus erster Fördereinheit und zweiter Fördereinheit ein Aktor zugeordnet ist, der gesteuert oder geregelt werden kann. Die steuerungstechnische Bewegungskopplung sieht nun vor, dass eine Bewegung der ersten Fördereinheit oder der zweiten Fördereinheit deshalb zu einer inversen Bewegung der jeweils anderen aus erster Fördereinheit und zweiter Fördereinheit führt, weil die Bewegung der ersten Fördereinheit oder der zweiten Fördereinheit dazu führt, dass der jeweils anderen Fördereinheit ein steuerungstechnisches Signal übermittelt wird, das verursacht, dass die jeweils andere Fördereinheit eine inverse Bewegung ausführt. Auch diese Art der inversen Bewegungskopplung ist vergleichsweise einfach und zuverlässig. Alle drei Alternativen der inversen Bewegungskopplung bewirken, dass sich erstes Material und zweites Material präzise und zuverlässig im Bauraum austauschen lässt oder im Bauraum mischen lässt. Somit können originalgetreue Dentalrestaurationen hergestellt werden.

In einem weiteren Beispiel sind ferner die erste Fördereinheit oder die zweite Fördereinheit über das erste Material und/oder das zweite Material zumindest zeitweise hydromechanisch mit der Bauplattform bewegungsgekoppelt. Somit lässt sich die Bauplattform mittels der ersten Fördereinheit oder der zweiten Fördereinheit indirekt, d. h. über das erste Material und/oder das zweite Material bewegen, beispielsweise um ein Inkrement, das einer Dicke einer herzustellenden Bauteilschicht entspricht, z. B. 50 bis 100 Mikrometer. Dabei ist die Dicke der Bauteilschicht allgemeiner gesprochen lediglich durch die Opazität und die Reaktivität des Materials limitiert.

Gemäß einer Variante sind die Bauplattform, die erste Fördereinheit und die zweite Fördereinheit selektiv und einzeln feststellbar, um jeweils zwei aus Bauplattform, erster Fördereinheit und zweiter Fördereinheit über das erste Material und/oder über das zweite Material hydromechanisch bewegungszukoppeln. In einem Beispiel, in dem die Bauplattform mittels der ersten Fördereinheit bewegt werden soll, kann also die zweite Fördereinheit selektiv und einzeln festgestellt, d.h. fixiert, werden. Folglich sind die Bauplattform und die erste Fördereinheit zuverlässig und präzise bewegungsgekoppelt. Das bedeutet, dass aufgrund der Kopplung über das erste Material und/oder das zweite Material eine Bewegung der ersten Fördereinheit zu einer Bewegung der Bauplattform führt. In einem Beispiel, in dem die Bauplattform mittels der zweiten Fördereinheit bewegt werden soll, kann die erste Fördereinheit selektiv und einzeln festgestellt, d.h. fixiert, werden. Folglich sind die Bauplattform und die zweite Fördereinheit zuverlässig und präzise bewegungsgekoppelt. Das bedeutet, dass aufgrund der Kopplung über das erste Material und/oder das zweite Material eine Bewegung der zweiten Fördereinheit zu einer Bewegung der Bauplattform führt. In einem Beispiel, in dem die zweite Fördereinheit mittels der ersten Fördereinheit bewegt werden soll, kann die Bauplattform selektiv und einzeln festgestellt, d.h. fixiert, werden. Folglich sind die erste Fördereinheit und die zweite Fördereinheit zuverlässig und präzise bewegungsgekoppelt. Das bedeutet, dass aufgrund der Kopplung über das erste Material und/oder das zweite Material eine Bewegung der ersten Fördereinheit zu einer Bewegung der zweiten Fördereinheit führt. In einem Beispiel, in dem die erste Fördereinheit mittels der zweiten Fördereinheit bewegt werden soll, kann die Bauplattform selektiv und einzeln festgestellt, d.h. fixiert, werden. Folglich sind die zweite Fördereinheit und die erste Fördereinheit zuverlässig und präzise bewegungsgekoppelt. Das bedeutet, dass aufgrund der Kopplung über das erste Material und/oder das zweite Material eine Bewegung der zweiten Fördereinheit zu einer Bewegung der ersten Fördereinheit führt. Das selektive und einzelne Feststellen, d.h. Fixieren, der Bauplattform, der ersten Fördereinheit oder der zweiten Fördereinheit führt zu präzisen und verlässlichen Bewegungskopplung. Dies wiederum hat den Effekt, dass das erste Material im Bauraum einfach und zuverlässig durch zweites Material ersetzt werden kann oder umgekehrt.

Ebenso können das erste Material und das zweite Material zuverlässig gemischt werden. Dies wird insbesondere erreicht, ohne dass die Bauplattform bewegt wird.

Die Bauplattform kann als Endfläche eines in einem Zylinder geführten Kolbens ausgebildet sein. Ein derartiger Aufbau der Bauplattform ist strukturell einfach. Ferner bewirkt eine derartige Konfiguration, dass die Bauplattform durch eine hydromechanische Kopplung über das erste Material und/oder das zweite Material mittels der ersten Fördereinheit und/oder mittels der zweiten Fördereinheit bewegt werden kann.

In einem Beispiel umfasst die Vorrichtung ferner einen dritten Behälter für drittes Material, der materialleitend mit dem Bauraum verbunden ist, sowie eine dritte Fördereinheit zum Fördern von drittem Material aus dem dritten Behälter in den Bauraum. Die erste Fördereinheit, die zweite Fördereinheit und die dritte Fördereinheit sind zumindest zeitweise paarweise invers bewegungsgekoppelt. Die Bewegungskopplung ist mechanisch oder steuerungstechnisch. Insbesondere ist die Bewegungskopplung hydromechanisch und erfolgt über das erste Material, das zweite Material und/oder das dritte Material. Es kann folglich ein drittes Material verwendet werden, um das Bauteil, insbesondere die Dentalrestauration, herzustellen. Darüber hinaus lässt sich das erste Material oder das zweite Material im Bauraum durch drittes Material austauschen. Umgekehrt gilt dasselbe. Ferner wird es so möglich, Mischungen aus dem dritten Material und erstem Material und/oder zweitem Material zur Herstellung des Bauteils zu verwenden. Dadurch lässt sich die Originaltreue der Dentalrestauration weiter steigern.

Es versteht sich, dass die vorliegende Erfindung nicht auf die Verwendung von drei Behältern und drei Materialien beschränkt ist. Selbstverständlich ist es auch möglich, vier oder mehr Behälter und Materialien zu verwenden. Die im Zusammenhang mit dem ersten und zweiten Behälter vorgenommenen Erläuterungen gelten folglich in entsprechender Weise auch für Vorrichtungen mit drei, vier oder mehr Behältern.

In einer Variante umfasst die Vorrichtung ferner einen Überschussbehälter zur Aufnahme von überschüssigem ersten Material und/oder überschüssigem zweiten Material. Der Überschussbehälter ist materialleitend mit dem Bauraum verbunden. Es lässt sich also beim Herstellen des Bauteils überschüssiges erstes Material und/oder überschüssiges zweites Material in den Überschussbehälter fördern. Dadurch lässt sich die Qualität der Bauteilschichten steigern, sodass insgesamt eine erhöhte Originalgetreue der Dentalrestauration erreicht wird. Insbesondere lässt sich das überschüssige erste Material und/oder das überschüssige zweite Material mittels der ersten Fördereinheit und/oder der zweiten Fördereinheit durch hydromechanische Kopplung in den Überschussbehälter fördern. Es versteht sich, dass in einem Fall, in dem wenigstens ein weiteres Material, d.h. ein über das erste Material und das zweite Material hinausgehendes Material, verwendet wird, der Überschussbehälter auch zur Aufnahme von überschüssigem weiteren Material ausgebildet sein kann. Dasselbe gilt, wenn mehrere weitere Materialien verwendet werden.

Zusätzlich wir die Aufgabe durch ein Verfahren zum schichtweisen Herstellen eines Bauteils, insbesondere einer Dentalrestauration, gelöst. Dabei umfasst wenigstens eine Bauteilschicht sowohl ein erstes Material als auch ein zweites Material. Das Verfahren umfasst:
- Vorsehen einer Schicht aus unausgehärtetem ersten Material und Aushärten zumindest eines Abschnitts der Schicht, sodass die Schicht einen Bereich aus gehärtetem ersten Material und einen Bereich aus unausgehärtetem ersten Material umfasst,
- Ersetzen des unausgehärteten ersten Materials in der Schicht durch unausgehärtetes zweites Material, sodass die Schicht einen Bereich aus gehärtetem ersten Material und einen Bereich aus unausgehärtetem zweiten Material umfasst, und
- Aushärten zumindest eines Abschnitts der Schicht, welcher zweites Material umfasst, sodass die Schicht einen Bereich aus gehärtetem ersten Material, einen Bereich aus gehärtetem zweiten Material, und einen Bereich aus unausgehärtetem zweiten Material umfasst.

Die in diesem Zusammenhang vorgesehenen Schichten sind beispielsweise durch eine Bauplattform oder bereits hergestellte Bauteilschichten und eine Aushärteeinheit begrenzt.

Mittels dieses Verfahrens kann also ein Bauteil, insbesondere eine Dentalrestauration, schichtweise hergestellt werden, wobei wenigstens eine Bauteilschicht sowohl ein erstes Material als auch ein zweites Material umfasst. Dabei liegen das erste Material und das zweite Material nebeneinander innerhalb der Bauteilschicht vor. Das erste Material und das zweite Material sind also nicht vermischt. Auf diese Weise lässt sich insbesondere ein Bauteil, vorzugsweise eine Dentalrestauration, nach dem Kern-Schale-Prinzip herstellen, wobei ein Kernbereich der Dentalrestauration aus einem anderen Material hergestellt wird als ein den Kernbereich zumindest abschnittsweise umgebender Schalenbereich. Somit lassen sich originalgetreue Dentalrestaurationen herstellen.

Bevorzugt ist beim Ausführen des erfindungsgemäßen Verfahrens derjenige Bereich, in dem die Schicht aus erstem Material und zweitem Material hergestellt wird, d.h. derjenige Bereich, in dem das herzustellende Bauteil entsteht, gegenüber einer Umgebung hermetisch abgeschlossen ist. Das bedeutet, dass dieser Bereich insbesondere bezüglich des ersten Materials und des zweiten Materials dicht gegenüber einer Umgebung abgeschlossen ist. Das gilt insbesondere auch für den Schritt, in dem unausgehärtetes erstes Material durch unausgehärtetes zweites Material ersetzt wird. Es lässt sich somit ein qualitativ hochwertiges Bauteil herstellen.

Dieses erfindungsgemäße Verfahren wird bevorzugt mittels einer erfindungsgemäßen Vorrichtung ausgeführt.

Wie bereits erwähnt, versteht es sich, dass auch wenn das erfindungsgemäße Verfahren lediglich anhand einer Bauteilschicht, die sowohl ein erstes Material als auch ein zweites Material umfasst, erläutert wurde, es auch möglich ist, mittels der erfindungsgemäßen Verfahrens Bauteile, insbesondere Dentalrestaurationen, herzustellen, die mehrere derartige Bauteilschichten umfassen. Insbesondere können mittels des erfindungsgemäßen Verfahrens Bauteile hergestellt werden, deren Mehrheit an Bauteilschichten sowohl ein erstes Material als auch ein zweites Material umfasst. Ebenso ist es möglich, Bauteile und/oder Bauteilschichten herzustellen, die mehr als zwei Materialien umfassen.

Wie bereits im Zusammenhang mit der erfindungsgemäßen Vorrichtung erläutert, kann das Aushärten durch Belichten erfolgen. Insbesondere kann das erfindungsgemäße Verfahren mit einem an sich bekannten Stereolithografieverfahren kombiniert werden.

Gemäß einer Ausführungsform kann das Ersetzen des unausgehärteten ersten Materials in der Schicht durch unausgehärtetes zweites Material durch Verdrängen des unausgehärteten ersten Materials mittels unausgehärtetem zweitem Material erfolgen. Das bedeutet, dass in einer Situation, in der im Bauraum, d. h. in der Schicht, unausgehärtetes erstes Material vorliegt, dieses unausgehärtete erste Material dadurch durch unausgehärtetes zweites Material ersetzt wird, dass unausgehärtetes zweites Material in den Bauraum, d. h. in die Schicht, gedrückt oder geschoben wird. Dadurch wird das unausgehärtete erste Material verdrängt, d. h. aus dem Bauraum hinausbefördert. Auf diese Weise lässt sich einfach und zuverlässig das erste Material durch das zweite Material austauschen.

Das Verfahren kann ferner ein Herstellen einer Strömungsgeometrie für erstes Material durch lokales Aushärten von zweitem Material umfassen. Alternativ oder zusätzlich kann das Verfahren ein Herstellen einer Strömungsgeometrie für zweites Material durch lokales Aushärten von erstem Material umfassen. Weiter alternativ oder zusätzlich kann das Verfahren ein Umströmen einer Strömungsgeometrie mit unausgehärtetem ersten Material und/oder unausgehärtetem zweiten Material umfassen. In der letztgenannten Alternative wird die Strömungsgeometrie somit zwar im Zusammenhang mit dem vorliegenden Verfahren genutzt, nicht aber im Zuge des Verfahrens hergestellt. In allen Varianten haben die Strömungsgeometrien den Effekt, dass sich ein gewünschtes Strömungsprofil für das erste Material und/oder das zweite Material einstellen lässt, z. B. eine lokal erhöhte Fließgeschwindigkeit. Es versteht sich dabei, dass insbesondere in den ersten beiden Alternativen die Strömungsgeometrie für erstes Material und/oder die Strömungsgeometrie für zweites Material zwar ein Bestandteil des herzustellenden Bauteils sein kann, im Regelfall aber kein Bestandteil des herzustellenden Bauteils ist. Die Strömungsgeometrie für erstes Material und/oder die Strömungsgeometrie für zweites Material wird also lediglich dazu hergestellt, um Materialströmungen zu beeinflussen. Entweder ist dabei die Strömungsgeometrie für erstes Material und/oder die Strömungsgeometrie für zweites Material vom herzustellenden Bauteil separat oder muss in einem Nachbearbeitungsschritt vom herzustellenden Bauteil separiert werden. In diesem Zusammenhang kann die Strömungsgeometrie Sollbruchstellen, z. B. in Form einer Perforation, umfassen. Eine derartige Sollbruchstelle erleichtert das Separieren der Strömungsgeometrie vom herzustellenden Bauteil. Die Strömungsgeometrie für erstes Material dient dabei dazu, eine Strömung an erstem Material derart zu beeinflussen, dass das erste Material präzise und zuverlässig in denjenigen Bereich der Schicht geleitet wird, in dem es vorgesehen sein soll. Insbesondere kann auf diese Weise eine Fließgeschwindigkeit des ersten Materials beim Ersetzen von Material gezielt erhöht werden. Dasselbe gilt für die Strömungsgeometrie für zweites Material. Insgesamt lässt sich also durch Nutzung der Strömungsgeometrie das erste Material und/oder das zweite Material präzise und zuverlässig innerhalb der Schicht anordnen, sodass sich eine originalgetreue Dentalrestauration herstellen lässt.

Gemäß einer Variante begrenzt die Strömungsgeometrie für erstes Material einen Bereich, in dem erstes Material auszuhärten ist, zumindest abschnittsweise und/oder umfasst einen Strömungskanal für erstes Material. Alternativ oder zusätzlich begrenzt die Strömungsgeometrie für zweites Material einen Bereich, in dem zweites Material auszuhärten ist, zumindest abschnittsweise und/oder umfasst einen Strömungskanal für zweites Material. Somit lassen sich diejenigen Bereiche der Schicht, in denen das erste Material und/oder das zweite Material angeordnet werden soll, präzise definieren. Es versteht sich dabei, dass ein Strömungskanal für erstes Material materialleitend mit dem ersten Behälter, der erstes Material enthält, verbunden sein muss. In gleicher Weise versteht es sich, dass ein Strömungskanal für zweites Material materialleitend mit dem zweiten Behälter, der zweites Material enthält, verbunden sein muss.

In einem Beispiel hat der Strömungskanal einen im Wesentlichen konstanten Querschnitt. Das bedeutet, dass ein größter Querschnitt des Strömungskanals und ein kleinster Querschnitt des Strömungskanals um maximal 30% unterschiedlich sind. Bevorzugt beträgt dieser Unterschied 20% oder weniger. Weiter bevorzugt beträgt dieser Unterschied 10 % oder weniger. Es ergibt sich so eine zuverlässige Strömung innerhalb des Strömungskanals.

In diesem Zusammenhang kann die Strömungsgeometrie für erstes Material derart gestaltet sein, dass das erste Material einen bereits ausgehärteten Abschnitt des herzustellenden Bauteils an einer Aussenseite mit einer vergleichsweise hohen Fließgeschwindigkeit umströmen muss. Dabei kann ein verhältnismäßig großer Teil des Bauraums von ausgehärtetem Material belegt sein.

Gemäß einem anderen Beispiel ändert sich ein Querschnitt des Strömungskanals, d.h. der Querschnitt ist im Wesentlichen nicht konstant. Ein größter Querschnitt des Strömungskanals und ein kleinster Querschnitt des Strömungskanals unterscheiden sich dabei deutlich, z. B. um 50% bis 100%, z. B. 90%. Auch auf diese Weise lässt sich die Strömung innerhalb des Strömungskanals gezielt beeinflussen.

Es versteht sich, dass die Strömungsgeometrie für erstes Material und/oder die Strömungsgeometrie für zweites Material stets an den konkreten Anwendungsfall, d.h. an das konkret herzustellende Bauteil angepasst sein muss. Ferner müssen dabei die Materialeigenschaften des ersten Materials und/oder des zweiten Materials berücksichtigt werden. Beispielsweise müssen Querschnittsgrößen an die jeweilige Viskosität angepasst sein, da zu kleine Querschnitte zu vergleichsweise hohen Strömungswiderständen führen. Zu große Querschnitte führen zu einer vergleichsweise kleinen Fließgeschwindigkeit. Das kann zu unzureichendem Ersetzen von unausgehärtetem ersten Material durch unausgehärtetes zweites Material führen oder umgekehrt. Es versteht sich dabei, dass die Querschnitte dabei durch eine Schichtdicke begrenzt sind. Ferner muss eine Festigkeit des ausgehärteten Materials berücksichtigt werden, da sich dadurch bestimmt, welche Druckkräfte, die durch Strömungswiderstände entstehen, vom ausgehärteten Material ertragen werden können. Ferner müssen in diesem Zusammenhang eine Fließgeschwindigkeit des unausgehärteten Materials berücksichtigt werden und eine resultierende Scherrate. Ebenso muss berücksichtigt werden, dass ausgehärtetes Material dazu führen kann, dass die bewegungsantreibbare Bauplattform an feststehenden Abschnitten des Bauraums haftet. Vereinfacht gesagt, wirkt das ausgehärtete Material als Klebstoff. Derartige Haftungseffekte können unter Umständen zu unerwünschten Beschädigungen am herzustellenden Bauteil führen und müssen daher gezielt beeinflusst werden.

In einem Beispiel umfasst die Strömungsgeometrie sogenannte Supportstrukturen, d.h. Strukturen, die das herzustellende Bauteil während des Herstellungsvorgangs stützen.

Ein anderes Beispiel umfasst das Verschließen von mittels Strömungsgeometrien erzeugten Strömungskanälen. Das hat den Vorteil, dass beim weiteren Verfahrensablauf kein Material mehr durch den Strömungskanal fliessen kann. Dadurch wird die Effizienz des Verfahrens gesteigert.

In noch einem Beispiel umfasst das Verfahren einen Reinigungsschritt. Dabei werden die Strömungsgeometrieben verwendet, um ein Reinigungsmittel zu führen, z. B. ein isopropanolhaltiges Reinigungsmittel oder ein wasserhaltiges Reinigungsmittel. Der Reinigungsschritt dient dazu unausgehärtetes Material, das in unerwünschter Weise beim Herstellen des Bauteils am Bauteil haften geblieben ist, zu entfernen. Die Verwendung der Strömungsgeometrieben für den Reinigungsschritt kann eine Effizienz des Reinigungsschritts verbessern. Zudem kann eine Reinigung so vergleichsweise schnell durchgeführt werden. Ebenfalls kann Reinigungsmittel gespart werden.

Das Verfahren kann auch ein Entfernen von überschüssigem unausgehärteten ersten Material und/oder überschüssigem unausgehärteten zweiten Material umfassen. Wie bereits erwähnt, kann hierdurch die Qualität des hergestellten Bauteils gesteigert werden. Im Falle einer Dentalrestauration kann auf diese Weise eine Originaltreue weiter gesteigert werden.

In einem Fall, in dem diejenigen Vorrichtung, mittels der das erfindungsgemäße Verfahren ausgeführt wird, einen Überschussbehälter umfasst, ist es selbstverständlich auch denkbar, eine Strömungsgeometrie herzustellen, die eine Strömung in Richtung des Überschussbehälters beeinflusst.

Außerdem wird die Aufgabe durch ein Verfahren zum schichtweisen Herstellen eines Bauteils, insbesondere einer Dentalrestauration, gelöst. Dabei umfasst wenigstens eine Bauteilschicht sowohl ein erstes Material als auch ein zweites Material. Das Verfahren umfasst:
- Vorsehen von unausgehärtetem ersten Material und unausgehärtetem zweiten Material innerhalb einer Schicht,
- Mischen des unausgehärteten ersten Materials und des unausgehärteten zweiten Materials innerhalb der Schicht, und
- Aushärten zumindest eines Abschnitts der Mischung aus unausgehärtetem erstem Material und unausgehärtetem zweiten Material innerhalb der Schicht.

Die in diesem Zusammenhang vorgesehenen Schichten sind beispielsweise durch eine Bauplattform oder eine bereits hergestellte Schicht des Bauteils und eine Aushärteeinheit begrenzt. Mittels dieses Verfahrens lässt sich also ein Bauteil schichtweise herstellen, bei dem in wenigstens einer Schicht eine Mischung aus erstem Material und zweitem Material vorhanden ist. Somit lassen sich originalgetreue Dentalrestaurationen herstellen.

Dieses erfindungsgemäße Verfahren wird bevorzugt mittels einer erfindungsgemäßen Vorrichtung ausgeführt.

Es versteht sich, dass auch wenn das erfindungsgemäße Verfahren anhand einer einzigen Paarung aus einer ersten Bauteilschicht, die aus dem ersten Material hergestellt ist, und einer daran angrenzende zweiten Bauteilschicht, die aus dem zweiten Material hergestellt ist, erläutert wurde, es auch möglich ist, mittels des erfindungsgemäßen Verfahrens Bauteile herzustellen, die mehrere derartige Paare an aneinander angrenzenden Bauteilschichten umfassen, welche aus unterschiedlichen Materialien hergestellt sind.

Dabei kann das Mischen des unausgehärteten ersten Materials und des unausgehärteten zweiten Materials durch Bewegen einer zwischen dem unausgehärteten ersten Material und dem unausgehärteten zweiten Material vorliegenden Kontaktfläche innerhalb der Schicht erfolgen. Mit anderen Worten werden das erste Material und das zweite Material innerhalb der Schicht bewegt, um eine Mischung aus erstem Material und zweitem Material zu erzeugen. Auf diese Weise lässt sich das erste Material und das zweite Material zuverlässig mischen.

Die Erfindung wird nachstehend anhand verschiedener Ausführungsbeispiele erläutert, die in den beigefügten Zeichnungen gezeigt sind. Es zeigen:
- Figur 1: eine erfindungsgemäße Vorrichtung in einer perspektivischen, geschnittenen Ansicht, wobei ein in schichtweiser Herstellung befindliches Bauteil in Form einer Dentalrestauration im Inneren der Vorrichtung vorgesehen ist.
- Figur 2: die Vorrichtung aus Figur 1 in einer Seitenansicht,
- Figuren 3 bis 7: Schritte eines erfindungsgemäßen Verfahrens, das mittels der Vorrichtung aus den Figuren 1 und 2 ausgeführt wird,
- Figur 8: eine Verfahrensvariante, bei der zusätzlich zum Bauteil eine Strömungsgeometrie aus ausgehärtetem Baumaterial schichtweise hergestellt wird,
- Figur 9: eine andere Verfahrensvariante, bei der zusätzlich zum Bauteil eine Strömungsgeometrie schichtweise hergestellt wird,
- Figur 10: eine Variante der Vorrichtung aus Figuren 1 und 2, die Sperrschieber umfasst,
- Figuren 11 und 12: eine andere Variante der Vorrichtung aus den Figuren 1 und 2, die ein Trennelement umfasst,
- Figuren 13 und 14: eine zusätzliche Variante der Vorrichtung, die eine Mischkontur umfasst,
- Figur 15: eine weitere Variante der Vorrichtung, die eine Mischkontur umfasst, und
- Figur 16: eine erfindungsgemäße Vorrichtung gemäß einem anderen Ausführungsbeispiel.

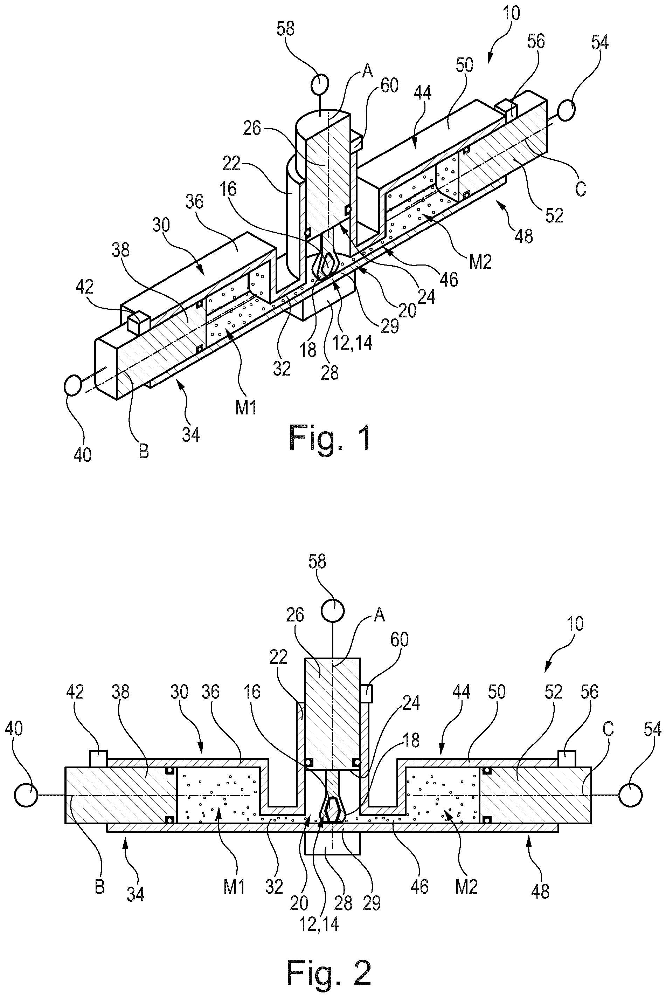

Figur 1 zeigt eine Vorrichtung 10 zum schichtweisen Herstellen eines Bauteils 12. In der dargestellten Ausführungsform handelt es sich beim Bauteil 12 um eine Dentalrestauration 14.

Obwohl das Bauteil 12, vorliegend die Dentalrestauration 14, nicht zur Vorrichtung 10 gehört, ist diese in Figur 1 dargestellt, um die Erläuterung der Vorrichtung 10 zu erleichtern.

Konkret handelt es sich bei der Dentalrestauration 14 aus Figur 1 einen nach dem Kern-Schale-Prinzip hergestellten Ersatzzahn. Das bedeutet, dass die Dentalrestauration 14 einen Kernbereich 16 umfasst, der aus einem ersten Material M1 herzustellen ist, und einen den Kernbereich 16 zumindest teilweise umgebenden Schalenbereich 18 umfasst, der aus einem zweiten Material M2 herzustellen ist.

Dabei unterscheiden sich das erste Material M1 und das zweite Material M2 hinsichtlich wenigstens einer Materialeigenschaft.

Die Vorrichtung 10 umfasst einen Bauraum 20, in dem das Bauteil 12, d. h. die Dentalrestauration 14, schichtweise hergestellt wird. In der dargestellten Ausführungsform ist der Bauraum 20 als Ende eines Zylinders 22 mit im Wesentlichen kreisförmigen Querschnitt gebildet. Auf einer ersten axialen Seite ist der Bauraum 20 durch eine bewegungsantreibbare Bauplattform 24 begrenzt, auf der das herzustellende Bauteil 12 schichtweise aufgebaut werden kann.

In der dargestellten Ausführungsform ist die Bauplattform 24 als axiale Endfläche eines Kolbens 26 ausgebildet, der im Zylinder 22 geführt ist. Der Kolben 26 lässt sich also entlang einer Zylinderachse A verschieben.

Auf einer der Bauplattform 24 entgegengesetzten Seite ist der Bauraum 20 durch eine Aushärteeinheit 28 begrenzt, welche dazu ausgebildet ist, im Bauraum 20 vorliegendes erstes Material M1 und/oder zweites Material M2 auszuhärten. Zu diesem Zweck umfasst die Aushärteeinheit 28 ein transparentes Wandelement 29, das im Bereich der Aushärteeinheit 28 den Bauraum 20 begrenzt.

In der dargestellten Ausführungsform ist die Vorrichtung 10 dazu ausgebildet, ein Stereolithografieverfahren auszuführen. Dementsprechend ist die Aushärteeinheit 28 dazu ausgebildet, das erste Material M1 und/oder das zweite Material M2 zum Aushärten zu belichten. Es versteht sich, dass hierzu das erste Material M1 und das zweite Material M2 auf die Aushärteeinheit 28 derart abgestimmt sein müssen, dass sie durch Belichtung mittels der Aushärteeinheit 28 ausgehärtet werden können.

Die Vorrichtung 10 umfasst darüber hinaus einen ersten Behälter 30 für erstes Material M1. In der dargestellten Ausführungsform ist dabei erstes Material M1 im Behälter 30 gespeichert.

Der erste Behälter 30 ist über einen ersten Kanal 32 materialleitend mit dem Bauraum 20 verbunden.

Ferner umfasst die Vorrichtung eine erste Fördereinheit 34, die dazu ausgebildet ist, erstes Material aus dem Behälter 30 in den Bauraum 20 zu fördern.

In der dargestellten Ausführungsform ist der erste Behälter 30 als Abschnitt eines Zylinders 36 mit im Wesentlichen rechteckiger Grundfläche gebildet.

Die erste Fördereinheit 34 umfasst dabei einen Kolben 38, der abschnittsweise im Innenraum des Zylinders 36 aufgenommen ist und entlang einer Zylinderachse B des Zylinders 36 verschiebbar ist.

Darüber hinaus umfasst die erste Fördereinheit 34 einen in den Figuren 1 und 2 lediglich schematisch dargestellten Aktor 40, mittels dem sich der Kolben 38 wahlweise entlang der Zylinderachse B verschieben lässt.

Dabei ist der Aktor 40 so ausgebildet, dass er den Kolben 38 aktiv in Richtung zum Bauraum 20 bewegen kann, wenn der Aktor 40 aktiviert ist. Ferner ist der Aktor 40 so ausgebildet, dass der Kolben 38 in einem deaktivierten Zustand des Aktors 40 passiv verschoben werden kann.

Darüber hinaus weist die Vorrichtung 10 eine erste Blockiereinheit 42 auf, mittels der der Kolben 38 festgestellt werden kann. Das bedeutet, dass eine Bewegung des Kolbens 38 mittels der ersten Blockiereinheit 42 blockiert werden kann. Auch die erste Blockiereinheit 42 ist in Figur 1 und 2 lediglich schematisch dargestellt.

Die Vorrichtung 10 umfasst darüber hinaus einen zweiten Behälter 44 für zweites Material M2. In der dargestellten Ausführungsform ist dabei zweites Material M2 im Behälter 44 gespeichert.

Der zweite Behälter 44 ist über einen zweiten Kanal 46 materialleitend mit dem Bauraum 20 verbunden.

Ferner umfasst die Vorrichtung eine zweite Fördereinheit 48, die dazu ausgebildet ist, zweites Material M2 aus dem Behälter 44 in den Bauraum 20 zu fördern.

In der dargestellten Ausführungsform ist der zweite Behälter 44 als Abschnitt eines Zylinders 50 mit im Wesentlichen rechteckiger Grundfläche gebildet.

Die zweite Fördereinheit 48 umfasst dabei einen Kolben 52, der abschnittsweise im Innenraum des Zylinders 50 aufgenommen ist und entlang einer Zylinderachse C des Zylinders 50 verschiebbar ist.

In der dargestellten Ausführungsform fallen die Zylinderachsen B und C zusammen.

Darüber hinaus umfasst die zweite Fördereinheit 48 einen in den Figuren 1 und 2 lediglich schematisch dargestellten Aktor 54, mittels dem sich der Kolben 52 wahlweise entlang der Zylinderachse C verschieben lässt.

Dabei ist der Aktor 54 so ausgebildet, dass er den Kolben 52 aktiv in Richtung zum Bauraum 20 bewegen kann, wenn der Aktor 54 aktiviert ist. Ferner ist der Aktor 54 so ausgebildet, dass der Kolben 52 in einem deaktivierten Zustand des Aktors 54 passiv verschoben werden kann.

Darüber hinaus weist die Vorrichtung 10 eine zweite Blockiereinheit 56 auf, mittels der der Kolben 52 festgestellt werden kann. Das bedeutet, dass eine Bewegung des Kolbens 52 mittels der zweiten Blockiereinheit 56 blockiert werden kann. Auch die zweite Blockiereinheit 56 ist in Figur 1 lediglich schematisch dargestellt.

Wie bereits erläutert, ist die Bauplattform 24 und somit der Kolben 26, an dem die Bauplattform 24 ausgebildet ist, bewegungsantreibbar.

Zu diesem Zweck ist in den Figuren 1 und 2 ein optionaler, lediglich schematisch dargestellter Aktor 58 mit dem Kolben 26 gekoppelt, sodass sich der Kolben 26 mittels dem Aktor 58 wahlweise entlang der Zylinderachse C verschieben lässt.

Dabei ist der Aktor 58 so ausgebildet, dass er den Kolben 52 aktiv in Richtung vom Bauraum 20 weg bewegen kann, wenn der Aktor 58 aktiviert ist. Ferner ist der Aktor 58 so ausgebildet, dass der Kolben 52 in einem deaktivierten Zustand des Aktors 58 passiv verschoben werden kann.

Darüber hinaus weist die Vorrichtung 10 eine dritte Blockiereinheit 60 auf, mittels der der Kolben 26 festgestellt werden kann. Das bedeutet, dass eine Bewegung des Kolbens 26 mittels der dritten Blockiereinheit 60 blockiert werden kann. Auch die dritte Blockiereinheit 60 ist in Figur 1 lediglich schematisch dargestellt.

Aufgrund der Tatsache, dass im Bauraum 20, im ersten Behälter 30 und im zweiten Behälter 44 erstes Material M1 und/oder zweites Material M2 vorhanden ist, ist es möglich, jeweils zwei aus erster Fördereinheit 34, zweiter Fördereinheit 48 und Bauplattform 24 über das erste Material M1 und/oder das zweite Material M2 zumindest zeitweise hydromechanisch zu koppeln. Es versteht sich, dass hier ferner davon ausgegangen wird, dass auch im ersten Kanal 32 erstes Material M1 vorliegt und im zweiten Kanal 46 zweites Material M2 vorliegt.

Eine derartige hydromechanische Kopplung ist dabei invers. Das bedeutet, dass sich die hydromechanisch gekoppelten Elemente, d. h. zwei Elemente ausgewählt aus erster Fördereinheit 34, zweiter Fördereinheit 48 und Bauplattform 24, mit umgekehrtem Vorzeichen bewegen.

Eine hydromechanische Kopplung setzt voraus, dass die beiden hydromechanisch gekoppelten Elemente, d. h. zwei Elemente ausgewählt aus erster Fördereinheit 34, zweiter Fördereinheit 48 und Bauplattform 24, prinzipiell beweglich sind. D. h., dass die jeweils zugehörigen Blockiereinheiten 42, 56, 60 eine solche Bewegung freigeben.

Dies wird nachfolgend anhand eines Verfahrens zum schichtweisen Herstellen eines Bauteils, insbesondere einer Dentalrestauration 14, erläutert, wobei das Verfahren mittels der Vorrichtung 10 ausgeführt wird.

Mittels des Verfahrens wird ein Bauteil 12 schichtweise hergestellt, bei dem wenigstens eine Bauteilschicht sowohl ein erstes Material M1 als auch ein zweites Material M2 umfasst, das erste Material M1 und das zweite Material M2 jedoch nicht vermischt sind. Mit anderen Worten kann ein Bauteil 12 gemäß dem Kern-Schale-Prinzip hergestellt werden.

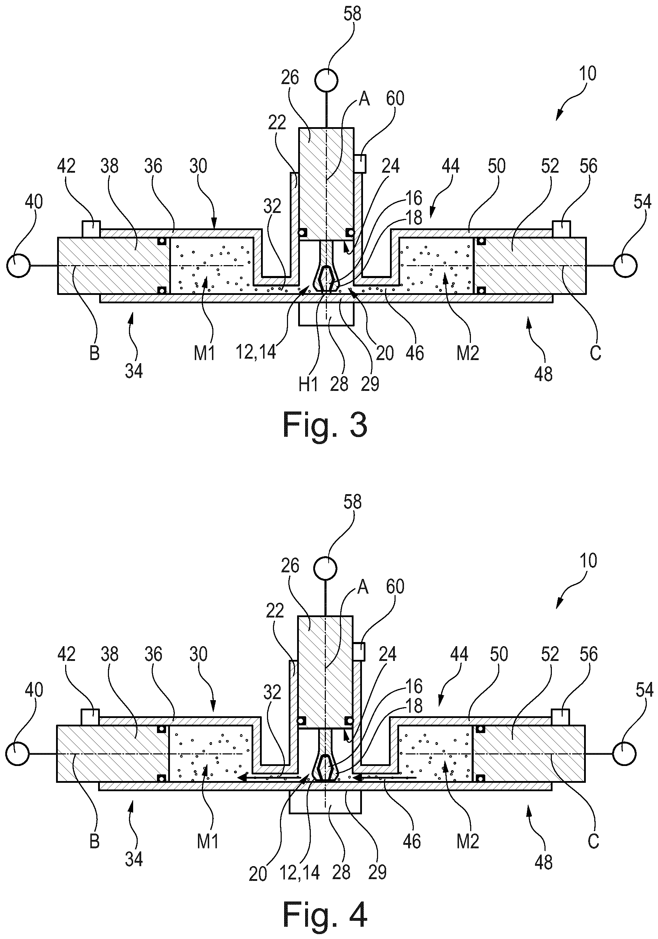

Die Schritte dieses Verfahrens werden nachfolgend mit Bezug auf die Figuren 3 bis 7 erläutert. Der einfacheren Erläuterungen wegen wird dabei im Folgenden nicht die Herstellung des Bauteils 12 als Ganzes erläutert, sondern lediglich das Herstellen einer Schicht des Bauteils 12, welche sowohl das erste Material M1 als auch das zweite Material M2 umfasst.

Eine Ausgangssituation ist dabei in Figur 3 gezeigt. In dieser Ausgangssituation ist unterhalb der bereits hergestellten, d. h. der bereits ausgehärteten Schichten des Bauteils 12, eine Schicht an unausgehärtetem ersten Material M1 vorgesehen.

Vorliegend wird der Kernbereich 16 des Bauteils 12 aus dem ersten Material M1 hergestellt.

Dementsprechend wird ein Abschnitt der Schicht aus unausgehärtetem ersten Material M1 mittels der Aushärteeinheit 28 gehärtet. Dabei wird lediglich derjenige Abschnitt der Schicht aus unausgehärtetem ersten Material M1 gehärtet, der dem weiteren Verlauf des herzustellenden Kernbereichs 16 entspricht. Alle anderen Abschnitte der Schicht aus unausgehärtetem ersten Material M1 bleiben unausgehärtet.

In Figur 3 ist derjenige Bereich der Schicht aus unausgehärtetem ersten Material M1, der ausgehärtet wird, mit einem Rechteck H1 gekennzeichnet.

Im Ergebnis, d. h. nach dem Aushärten umfasst die Schicht also sowohl gehärtetes erstes Material M1 als auch unausgehärtetes erstes Material M1.

Danach wird das unausgehärtete erste Material M1 in der Schicht durch unausgehärtetes zweites Material M2 ersetzt.

Hierzu wird das unausgehärtete erste Material M1 durch unausgehärtetes zweites Material M2 verdrängt.

Zu diesem Zweck wird einerseits mittels der dritten Blockiereinheit 60 derjenige Kolben 26, an dem die Bauplattform 24 vorgesehen ist, festgestellt.

Die erste Fördereinheit 34 und die zweite Fördereinheit 48 sind grundsätzlich beweglich. Das bedeutet, dass der Kolben 38 sich grundsätzlich relativ zum Zylinder 36 bewegen kann und der Kolben 52 sich grundsätzlich relativ zum Zylinder 50 bewegen kann.

Vorliegend wird zum Verdrängen des unausgehärteten ersten Materials M1 der Aktor 54 genutzt. Mit diesem Aktor 54 wird der Kolben 52 in Richtung zum Bauraum 20 verschoben, sodass zweites Material M2 ausgehend vom zweiten Behälter 44 durch den zweiten Kanal 46 in den Bauraum 20 gedrückt wird.

Dies ist in Figur 4 durch Pfeile illustriert.

Dadurch wird das unausgehärtete erste Material M1 aus dem Bauraum 20 verdrängt. Nachdem der Kolben 38 innerhalb des Zylinders 36 beweglich ist, kann dieses erste Material in den Behälter 30 zurückgedrückt werden, wobei der Kolben 38 innerhalb des Zylinders 36 in eine Richtung weg vom Bauraum 20 verschoben wird.

Die ausgehärteten Abschnitte des ersten Materials M1 im Bauraum 20 sind nicht mehr fließfähig und bleiben daher an Ort und Stelle.

In dieser Situation sind also die erste Fördereinheit 34 und die zweite Fördereinheit 48 über das erstes Material M1 und das zweite Material M2 hydromechanischen invers bewegungsgekoppelt.

Nach diesem Schritt umfasst die Schicht einen Bereich aus gehärtetem ersten Material M1 und einen Bereich aus unausgehärtetem zweiten Material M2.

Nachfolgend wird zumindest ein Abschnitt der Schicht, welcher zweites Material M2 umfasst, ausgehärtet. Hierfür wird wieder die Aushärteeinheit 28 verwendet.

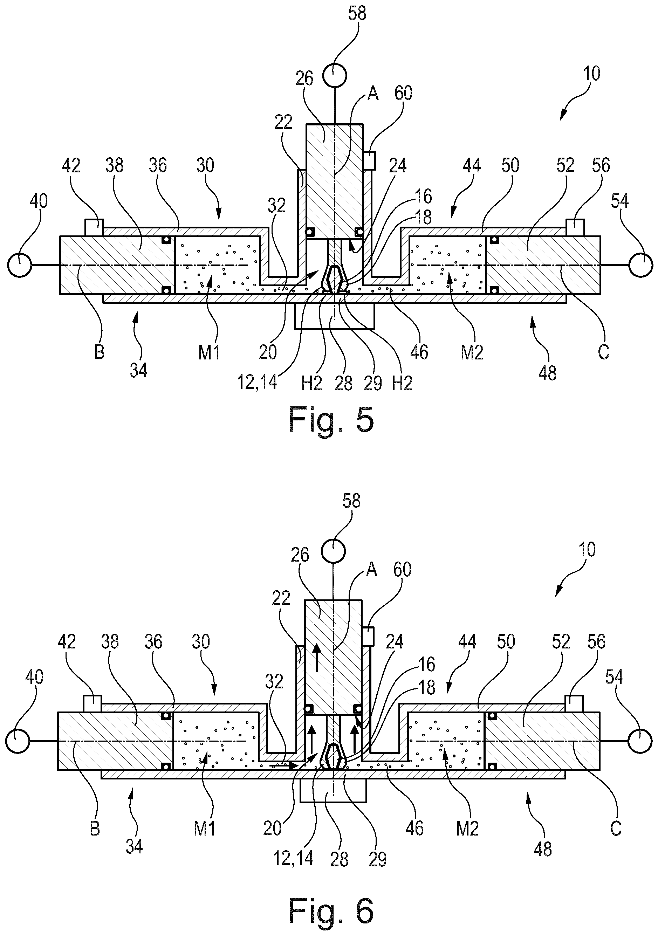

Dies ist in Figur 5 illustriert, in der der ausgehärtet Bereich an zweitem Material M2 mit zwei Rechtecken H2 gekennzeichnet ist.

Folglich umfasst die Schicht einen Bereich aus gehärtetem ersten Material M1, einen Bereich aus gehärtetem zweiten Material M2, und einen Bereich aus unausgehärtetem zweiten Material M2.

Damit ist die herzustellende Schicht des Bauteils 12 komplett. Es muss nun also die Bauplattform 24 um ein Inkrement angehoben werden, um die nächste Schicht des Bauteils 12 herstellen zu können.

In der dargestellten Ausführungsform beträgt ein solches Inkrement 50 bis 100 Mikrometer.

Vorliegend werden dabei zunächst die Abschnitte der nächsten Schicht hergestellt, die erstes Material M1 umfassen.

Daher wird mittels der zweiten Blockiereinheit 56 die zweite Fördereinheit 48 festgestellt. D. h., dass sich der Kolben 52 nicht mehr relativ zum Zylinder 50 bewegen kann.

Die Bauplattform 24 und die erste Fördereinheit 34 sind grundsätzlich beweglich.

Dabei wird zum Verschieben der Bauplattform 24 der Aktor 40 der ersten Fördereinheit 34 genutzt, wodurch eine neue, nicht ausgehärtete Schicht zur Verfügung gestellt wird.

Mittels dieses Aktors 40 wird der Kolben 38 der ersten Fördereinheit 34 in Richtung Bauraum 20 geschoben.

Nachdem der Kolben 26 innerhalb des Zylinders 22 beweglich ist, kann dadurch die Bauplattform 24 um ein Inkrement bewegt werden, wobei die Bewegung weg von der Aushärteeinheit 28 orientiert ist.

In diesem Schritt sind also die erste Fördereinheit 34 und die Bauplattform 24 hydromechanischen über das erste Material M1 und das zweite Material M2 invers bewegungsgekoppelt. Vereinfacht gesagt kann aufgrund der Feststellung, d.h. Fixierung, des Kolbens 52 erstes Material M1 unter die zuletzt ausgehärtete Schicht des Bauteils 12 geschoben werden.

Dies ist in Figur 6 durch Pfeile illustriert.

Sobald die Bauplattform um ein Inkrement verschoben wurde, wird diese mittels der dritten Blockiereinheit 60 festgestellt.

Nachdem im Bereich der zuvor hergestellten Schicht jedoch immer noch unausgehärtetes zweites Material M2 vorhanden ist, das jedoch nicht zur Herstellung des Kernbereichs 16 verwendet werden soll, wird in einem Folgeschritt das zweite Material M2 mittels des ersten Materials M1 verdrängt.

Hierzu bleibt der Kolben 26 mittels der dritten Blockiereinheit 60 festgestellt.

Die erste Fördereinheit 34 und die zweite Fördereinheit 48 sind grundsätzlich beweglich.

Nun wird der Aktor 40 der ersten Fördereinheit 34 genutzt. Mittels dieses Aktors 40 wird der Kolben 38 in Richtung Bauraum 20 geschoben. Dabei wird zweites Material M2 mittels dem ersten Material M1 verdrängt und in den Behälter 44 zurückgeschoben. Dies ist möglich, weil der Kolben 52 der zweiten Fördereinheit 48 zurückweichen kann.

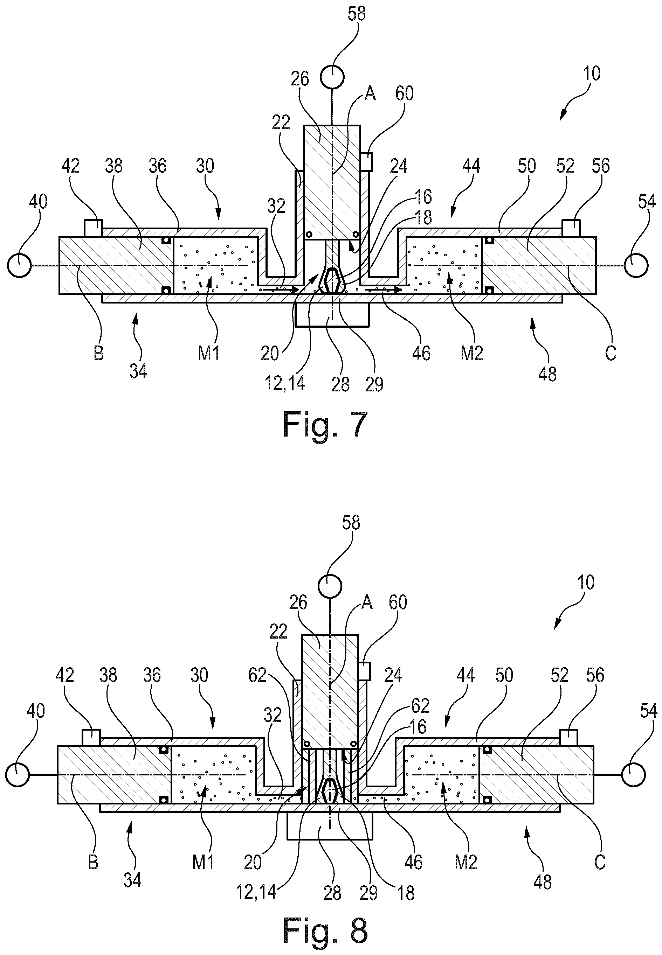

In Figur 7 ist das mittels Pfeilen illustriert.

Nun kann das erste Material M1 zumindest abschnittsweise mittels der Aushärteeinheit 28 ausgehärtet werden, wie eingangs anhand von Figur 3 erläutert wurde.

Im dargestellten Beispiel umfasst die Vorrichtung 10 also insgesamt drei Kolben 26, 38, 52. Während der Herstellung des Bauteils 12 können dabei selektiv und zeitweise zwei dieser Kolben 26, 38, 52 invers hydromechanischen gekoppelt werden. Der jeweils dritte dieser Kolben 26, 38, 52 ist dabei festgestellt, d. h. kann sich nicht bewegen. Auf diese Weise ist es möglich, stets nur einen Kolben mittels eines zugeordneten Aktors 40, 54, 58 zu bewegen. Der jeweils andere der Kolben wird aufgrund der hydromechanischen Kopplung mitbewegt, ohne dass dieser separat angetrieben werden muss.

In einem anderen Beispiel wird eine derartige hydromechanische Kopplung nicht verwendet. Stattdessen können jeweils zwei der drei Kolben 26, 38, 52 selektiv und zeitweise mechanisch gekoppelt werden. Dabei ist die mechanische Kopplung über nicht näher dargestellte Bauteile realisiert, die außerhalb der Zylinder 22, 36, 50 verlaufen. Beispielsweise umfassen diese Bauteile ein Gestänge.

Auch mit einer Vorrichtung 10, bei der anstelle der hydromechanischen Kopplung eine mechanische Kopplung verwendet wird, lässt sich das oben erläuterte Verfahren zum schichtweisen Herstellen eines Bauteils 12 ausführen.

In einem weiteren Beispiel wird sowohl auf eine hydromechanische Kopplung als auch auf eine mechanische Kopplung, die außerhalb der Zylinder 22, 36, 50 verläuft, verzichtet. Stattdessen wird eine steuerungstechnische Kopplung verwendet.

In diesem Beispiel ist es zwingend, dass jeder der Kolben 26, 38, 52 mit einem Aktor gekoppelt ist. Diese Aktoren sind steuerungstechnisch gekoppelt, sodass diese in koordinierter Weise betätigt werden können. Auf diese Weise lässt sich eine inverse Bewegungskopplung zwischen der ersten Fördereinheit 34 und der zweiten Fördereinheit 48 sowie zwischen eine aus erster Fördereinheit 34und zweiter Fördereinheit 48 und der Bauplattform 24 realisieren. In diesem Beispiel kann somit auf die Blockiereinheiten verzichtet werden.

Folglich kann auch mit einer Vorrichtung 10, die gemäß diesem Beispiel aufgebaut ist, das zuvor erläuterte Verfahren ausgeführt werden.

Figur 8 illustriert eine Variante des zuvor erläuterten Verfahrens. Dabei werden im Folgenden lediglich diejenigen Aspekte erläutert, die über das bereits erläutert Grundverfahren hinausgehen.

In der Verfahrensvariante aus Figur 8 wird neben dem herzustellenden Bauteil 12 noch ein zylindrisches Bauteil 62 hergestellt, dass das Bauteil 12 umgibt.

Dabei dient das zylindrische Bauteil 62 jedoch nicht als Dentalrestauration. Vielmehr dient das zylindrische Bauteil 62 dazu, unerwünschte Vermischungen aus erstem Material M1 und zweitem Material M2 zu verhindern.

Das wird dadurch erreicht, dass Bereiche, in denen potenziell eine Vermischung von erstem und zweitem Material stattfindet, mittels der Aushärteeinheit 28 ausgehärtet werden, sodass das zylindrische Bauteil 62 entsteht. Folglich sind das erste Material M1 und das zweite Material M2 in diesen Bereichen nicht mehr fließfähig. Somit können sich diese Materialien nicht mehr mit dem jeweils anderen Material vermischen.

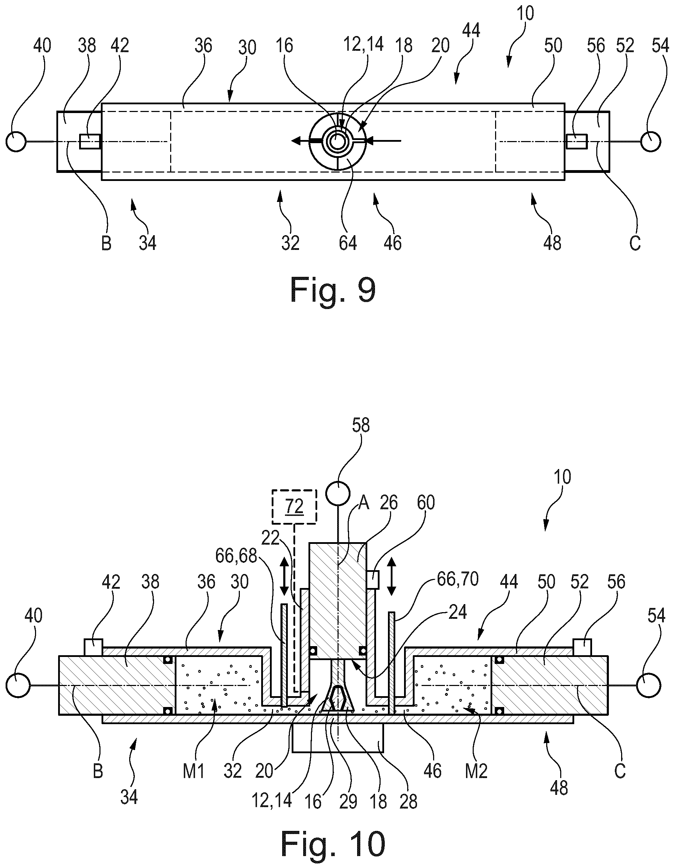

Figur 9 zeigt eine weitere Verfahrensvariante. Wie bisher wird dabei lediglich auf diejenigen Aspekte eingegangen, die über das bereits erläutert Grundverfahren hinausgehen.

In der Variante gemäß Figur 9 wird neben dem herzustellenden Bauteils 12 noch eine Strömungsgeometrie 64 hergestellt.

Im Beispiel aus Figur 9 ist diese Strömungsgeometrie 64 aus erstem Material M1 gefertigt, d.h. durch lokales Aushärten von erstem Material M1. Das bedeutet, dass in demjenigen Schritt, in dem das erste Material M1 mittels der Aushärteeinheit 28 ausgehärtet wird, um eine Schicht des Kernbereichs 16 zu erzeugen, zudem diejenigen Abschnitte der Strömungsgeometrie 64 ausgehärtet werden, die zur relevanten Schicht gehören.

Folglich muss nachfolgend bei der Herstellung derjenigen Abschnitte der Bauteilschicht aus dem zweiten Material M2 verglichen mit dem Grundverfahren weniger Material M1 in den ersten Behälter 30 zurückgeschoben werden als im Grundverfahren.

Das bedeutet, dass auch weniger zweites Material M2 benötigt wird, da lediglich so viel zweites Material M2 benötigt wird, dass die von der Strömungsgeometrie 64 freigelassenen Abschnitte der Schicht mit zweitem Material M2 ausgefüllt werden. Die Strömungsgeometrie 64 begrenzt dabei einen Bereich, in dem zweites Material M2 auszuhärten ist, zumindest abschnittsweise und/oder umfasst einen Strömungskanal für zweites Material M2.

Ferner bewirkt die Strömungsgeometrie 64 aufgrund der Tatsache, dass ein Abschnitt des Bauraums 20 von dieser beansprucht wird, dass ein Querschnitt für eine Strömung des zweiten Materials M2 verringert wird und somit eine Strömungsgeschwindigkeit oder Fließgeschwindigkeit erhöht wird. Auf diese Weise wird ein zuverlässiges Ersetzen von unausgehärtetem ersten Material durch unausgehärtetes zweites Material erreicht. Vereinfacht gesagt, wird aufgrund der erhöhten Strömungsgeschwindigkeit das erste Material zuverlässiger weggespült.

Auf diese Weise lässt sich eine Umströmung des Kernbereichs 16 mit dem zweites Material M2 besonders zuverlässig gestalten, sodass sich der Schalenbereich 18 mit besonders hoher Zuverlässigkeit und Präzision herstellen lässt.

Es versteht sich dabei, selbstverständlich auch möglich ist, in gleicher Weise eine Strömungsgeometrie 64 aus zweitem Material herzustellen, die dazu ausgebildet ist, eine Strömung aus erstem Material M1 zu beeinflussen.

Weiter alternativ ist es möglich, die Strömungsgeometrie 64 fix vorzusehen, d.h. als Bestandteil der Vorrichtung 10.

Eine weitere Variante des Verfahrens sowie eine Variante der Vorrichtung 10 ist in Figur 10 dargestellt.

Wie gehabt werden dabei lediglich die Unterschiede gegenüber dem bereits erläuterten Grundverfahren sowie die Unterschiede gegenüber den bisher erläuterten Aspekten der Vorrichtung 10 erwähnt.

In der Variante aus Figur 10 umfasst die Vorrichtung 10 ein Trennelement 66 zum Getrennthalten von erstem Material M1 und zweitem Material M2. Genauer gesagt umfasst das Trennelement 66 einen ersten Sperrschieber 68, mittels dem der erste Kanal 32 wahlweise abgesperrt und wahlweise freigegeben werden kann, und einen zweiten Sperrschieber 70, mittels dem der zweite Kanal 46 wahlweise abgesperrt und wahlweise freigegeben werden kann.

Ausgehend vom Grundverfahren wird daher das Verfahren zur Herstellung des Bauteils 12 derart geändert, dass in denjenigen Verfahrensschritten, in denen erstes Material M1 ausgehend vom ersten Behälter 30 durch den ersten Kanal 32 in den Bauraum 20 gedrückt wird, der zweite Sperrschieber 70 geschlossen ist. Somit kann kein Material in den zweiten Behälter 44 zurückströmen.

Besonders vorteilhaft ist in diesem Zusammenhang, wenn die Vorrichtung 10 zusätzlich mit einem optionalen Überschussbehälter 72 zur Aufnahme von überschüssigem ersten Material M1 und/oder überschüssigem zweiten Material M2 ausgestattet ist, wobei der Überschussbehälter 72 materialleitend mit dem Bauraum 20 verbunden ist. Ist dies der Fall, kann also dasjenige Material, das in unausgehärtetem Zustand im Bauraum 20 vorliegt, mittels des ersten Materials M1 in den Überschussbehälter 72 verschoben werden.

In gleicher Weise wird in denjenigen Verfahrensschritten, in denen zweites Material M2 ausgehend vom zweiten Behälter 44 durch den zweiten Kanal 46 in den Bauraum 20 gedrückt wird, der erste Sperrschieber 68 geschlossen. Somit kann kein Material in den ersten Behälter 30 zurückströmen.

Besonders vorteilhaft ist in diesem Zusammenhang wieder, wenn die Vorrichtung 10 zusätzlich mit einem Überschussbehälter 72 zur Aufnahme von überschüssigem ersten Material M1 und/oder überschüssigem zweiten Material M2 ausgestattet ist, wobei der Überschussbehälter 72 materialleitend mit dem Bauraum 20 verbunden ist. Ist dies der Fall, kann also dasjenige Material, das in unausgehärtetem Zustand im Bauraum 20 vorliegt, mittels des zweiten Materials M2 in den Überschussbehälter 72 verschoben werden.

Mit anderen Worten umfasst das Verfahren ein Entfernen von überschüssigem unausgehärteten ersten Material M1 und/oder überschüssigem unausgehärteten zweiten Material M2.

In Figur 10 ist der Überschussbehälter 72 lediglich gestrichelt und schematisch eingezeichnet.

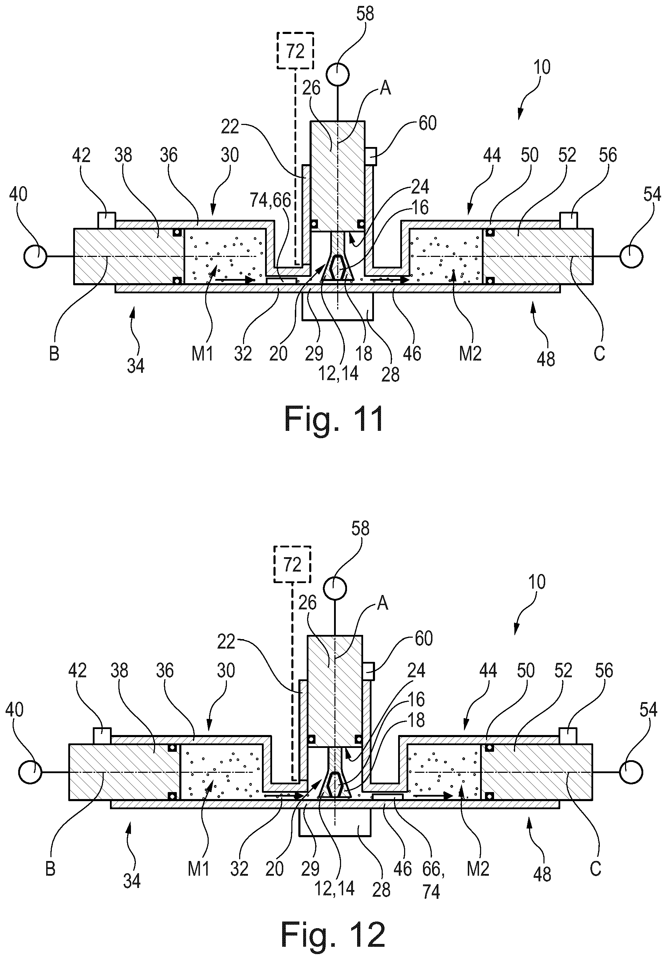

Die Figuren 11 und 12 zeigen eine weitere Variante der Vorrichtung 10, bei der ebenfalls ein Trennelement 66 verwendet wird.

Im Unterschied zur Variante aus Figur 10 ist dieses Trennelement 66 nun jedoch als verschiebbarer Stopfen 74 gestaltet, der wahlweise den ersten Kanal 32 oder den zweiten Kanal 46 verschließen kann. Hierfür lässt sich der Stopfen 74, d. h. das Trennelement 66, durch den Bauraum 20 schieben. Hierfür kann der Stopfen 74 mit einem nicht näher dargestellten Aktor gekoppelt sein. Beispielsweise sind der Stopfen 74 und der zugeordnete Aktor magnetisch gekoppelt. Alternativ kann kein solcher Aktor vorgesehen sein und der Stopfen 74 lediglich mittels des ersten Materials M1 und mittels des zweiten Materials M2 verschoben werden.

Beim Ausführen des Verfahrens funktioniert die Vorrichtung 10 aus den Figuren 11 und 12 im Wesentlichen genauso wie die Vorrichtung 10 aus Figur 10. Lediglich muss bedacht werden, dass aufgrund der geometrischen Ausdehnung des Stopfens 74 stets die Bauplattform 24 angehoben werden muss, wenn der stopfen 74 vom ersten Kanal 32 durch den Bauraum 20 in den zweiten Kanal 46 verschoben werden soll oder umgekehrt.

Es versteht sich, dass bei der Vorrichtung 10 aus den Figuren 11 und 12 der Stopfen 74 bei der Herstellung jeder Schicht einmal vom ersten Kanal 32 in den zweiten Kanal 46 verschoben werden muss.

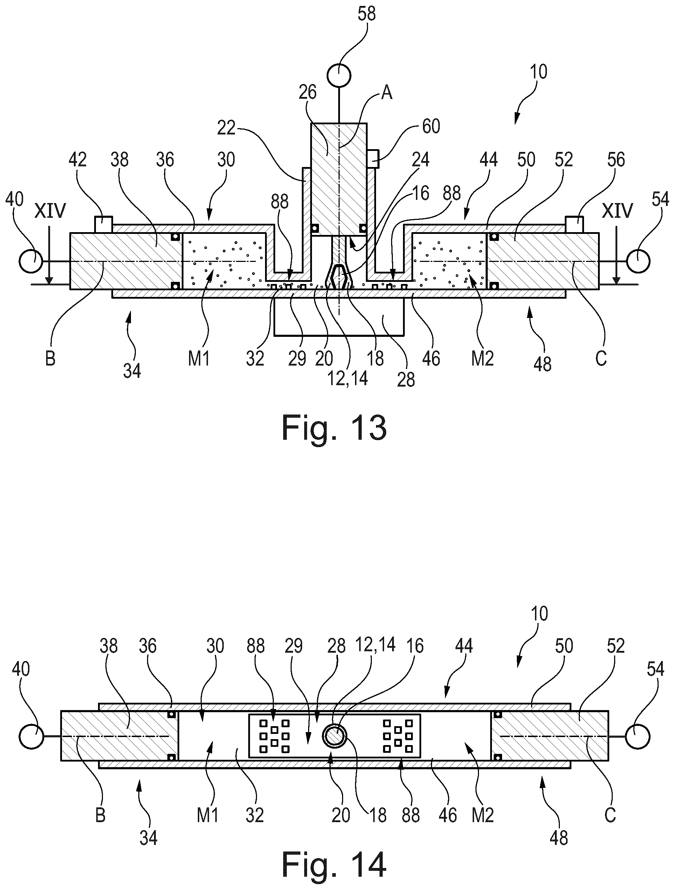

Eine weitere Variante der Vorrichtung 10 ist in den Figuren 13 und 14 dargestellt, wobei die Figur 14 eine Schnittdarstellung entlang der Ebene XIV-XIV in der Figur 13 zeigt. Dabei wird wieder lediglich auf die Unterschiede zu bereits erläuterten Varianten eingegangen.

In dieser Variante umfasst die Vorrichtung eine Mischkontur 88, die vorliegend eine Mehrzahl an Vorsprüngen umfasst, die innerhalb des ersten Kanals 32 angeordnet sind, sowie eine Mehrzahl an Vorsprüngen umfasst, die innerhalb des zweiten Kanals 46 angeordnet sind. Mit anderen Worten ist die Mischkontur 88 angrenzend and den Bauraum 20 angeordnet. Wenn also das erste Material M1 durch den ersten Kanal 32 in den Bauraum 20 strömt, muss das erste Material M1 diejenigen Vorsprünge der Mischkontur 88 umströmen, die im ersten Kanal 32 angeordnet sind. Dadurch wird das erste Material M1 durchmischt.

In gleicher Weise muss das zweite Material M2 diejenigen Vorsprünge der Mischkontur 88 umströmen, die im zweiten Kanal 46 angeordnet sind, wenn das zweite Material M1 durch den zweiten Kanal 46 in den Bauraum 20 strömt. Dadurch wird das zweite Material M2 durchmischt.

In der Variante aus den Figuren 13 und 14 ist die Mischkontur 88 aus erstem Material M1 oder zweitem Material M2 hergestellt. Die Aushärteeinheit 28 muss also entsprechend dimensioniert und ausgebildet sein, dass sie der Mischkontur 88 zugehörige Vorsprünge im ersten Kanal 32 und im zweiten Kanal 46 aushärten kann. Dementsprechend müssen die Wände des ersten Kanals 32 und des zweiten Kanal 46 auch in denjenigen Bereichen, in denen die Mischkontur 88 angeordnet sein soll, transparent sein, sodass sich das erste Material M1 und das zweite Material M2 zum Herstellen der Mischkontur 88 aushärten lässt.

Mittels der Vorrichtung 10 gemäß Figur 13 und 14 kann auch ein alternatives Verfahren zum schichtweisen Herstellen eines Bauteils 12, insbesondere der Dentalrestauration 14, ausgeführt werden. Dabei kann eine Bauteilschicht hergestellt werden, die sowohl das erste Material M1 als auch das zweite Material M2 umfasst, wobei das erste Material M1 und das zweite Material M2 gemischt sind.

Gemäß diesem Verfahren muss unausgehärtetes erstes Material M1 und unausgehärtetes zweites Material M2 innerhalb der Schicht vorgesehen werden.

Danach können das erste Material M1 und das zweite Material M2 innerhalb der Schicht gemischt werden. Hierzu wird eine zwischen dem unausgehärteten ersten Material M1 und dem unausgehärteten zweiten Material M2 vorliegende Kontaktfläche innerhalb der Schicht bewegt. Das erfolgt durch Bewegen der ersten Fördereinheit 34 und der zweiten Fördereinheit 48. Dabei ist der Kolben 26, der die Bauplattform 24 trägt, mittels der dritten Blockiereinheit 60 festgestellt.

Die erste Fördereinheit 34 und die zweite Fördereinheit 48 sind dabei, wie bereits erläutert, hydromechanischen invers bewegungsgekoppelt.

Zum Mischen des ersten Materials M1 und des zweiten Materials M2 werden also der Kolben 38 und der Kolben 52 entlang der jeweils zugehörigen Kolbenachsen B, C periodisch hin und her bewegt. Dies erfolgt mit einer Amplitude, die es erlaubt, dass Teile des zweiten Materials M2 mittels des Kolbens 52 bis in den ersten Kanal 32 gedrückt werden und Teile des ersten Materials M1 mittels des Kolbens 38 bis in den zweiten Kanal 46 gedrückt werden.

Mit anderen Worten wird die Kontaktfläche zwischen dem ersten Material M1 und dem zweiten Material M2 periodisch zwischen dem ersten Kanal 32 und dem zweiten Kanal 46 hin und her bewegt. Durch die Interaktion mit den Vorsprüngen der Mischkontur 88, werden auf diese Weise das erste Material M1 und das zweite Material M2 vermischt.

Darauffolgend wird zumindest ein Abschnitt der Mischung aus unausgehärtetem ersten Material M1 und unausgehärtetem zweiten Material M2 innerhalb der Schicht mittels der Aushärteeinheit 28 ausgehärtet.

Im Unterschied zum bereits erläuterten ersten Verfahren sind nun also sowohl das erste Material M1 als auch das zweite Material M2 in derselben Schicht vorhanden, wobei jedoch das erste Material M1 und das zweite Material M2 miteinander vermischt sind.

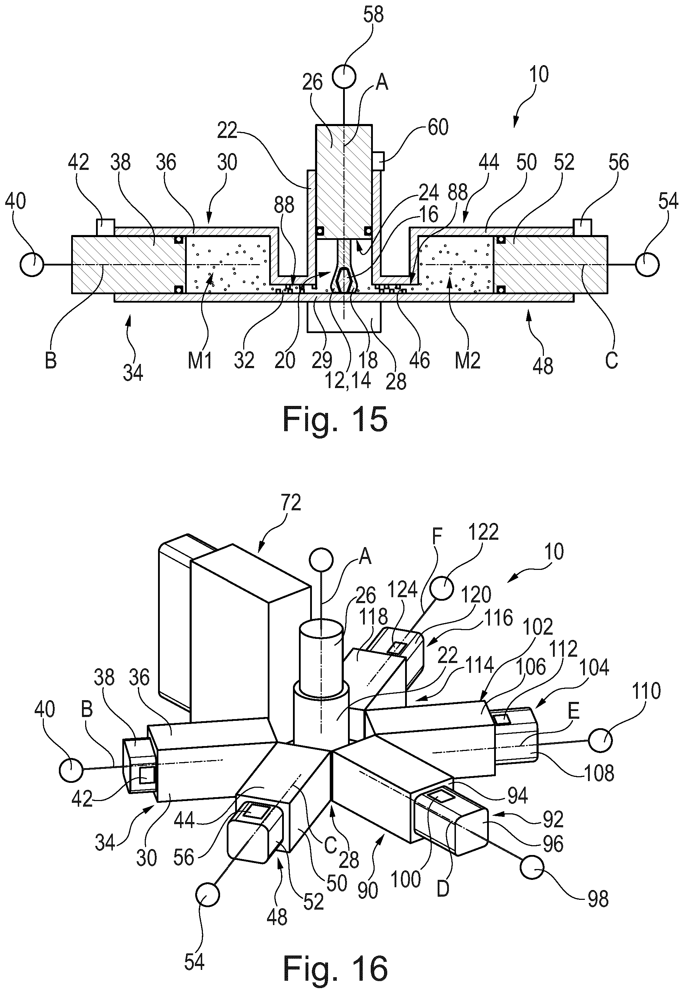

Figur 15 zeigt eine weitere Variante der Vorrichtung 10. Dabei ist wieder eine Mischkontur 88 vorgesehen. Im Unterschied zur Variante gemäß Figuren 13 und 14 ist die Mischkontur nun jedoch nicht aus erstem Material M1 und/oder zweitem Material M2 hergestellt, sondern ist als fester Bestandteil des ersten Strömungskanals 32 und des zweiten Strömungskanals 46 gestaltet. In dieser Variante muss die Aushärteeinheit 28 also nicht dazu ausgebildet sein, innerhalb des erste Kanals 32 und/oder innerhalb des zweiten Kanals 46 erstes Material M1 und/oder zweites Material M2 auszuhärten.

In allen vorgenannten Varianten, in denen eine Mischkontur 88 vorgesehen ist, setzt sich die Mischkontur aus einer Mehrzahl quaderförmiger Mischelemente zusammen, deren Kanten eckig, d.h. möglichst scharfkantig ausgeführt sind. Diese Scharfkantigkeit führt dazu, dass im Bereich der Kanten hohe Strömungsgeschwindigkeitsunterschiede bewirkt werden, die ein zuverlässiges Mischen bewirken.

Figur 16 zeigt eine weitere Variante der Vorrichtung 10.

Wieder wird lediglich auf die Unterschiede gegenüber den bereits erläuterten Vorrichtung 10 eingegangen. Die Vorrichtung aus Figur 16 umfasst in Summe fünf Behälter und fünf Fördereinheiten. Damit können mittels der Vorrichtung 10 aus Figur 16 insgesamt fünf Materialien verarbeitet werden. Ferner umfasst die Vorrichtung 10 aus Figur 16 einen Überschussbehälter 72.

In diesem Zusammenhang sind alle fünf Behälter und die jeweils zugehörigen Fördereinheiten genauso aufgebaut, wie in den vorhergehenden Ausführungsformen für den ersten Behälter 30, die erste Fördereinheit 34, den zweiten Behälter 44 und die zweite Fördereinheit 48 erläutert wurde.

Dementsprechend kann hinsichtlich des ersten Behälters 30, der ersten Fördereinheit 34, des zweiten Behälters 44 und der zweiten Fördereinheit 48 auf die vorstehenden Erläuterungen verwiesen werden.

Die Vorrichtung 10 aus Figur 16 umfasst darüber hinaus einen dritten Behälter 90 für drittes Material, wobei der dritte Behälter 90 in gleicher Weise wie der erste Behälter 30 und der zweite Behälter 44 über einen dritten Kanal materialleitend mit dem Bauraum 20 verbunden ist.

Ferner umfasst die Vorrichtung eine dritte Fördereinheit 92, die dazu ausgebildet ist, drittes Material aus dem dritten Behälter 90 in den Bauraum 20 zu fördern.

In der dargestellten Ausführungsform ist der dritte Behälter 90 als Abschnitt eines Zylinders 94 mit im Wesentlichen rechteckiger Grundfläche gebildet. Es versteht sich dabei, dass die rechteckige Grundfläche lediglich beispielhaft ist und auch andere Formen der Grundfläche in Frage kommen, z. B. rund.

Die dritte Fördereinheit 92 umfasst dabei einen Kolben 96, der abschnittsweise im Innenraum des Zylinders 94 aufgenommen ist und entlang einer Zylinderachse D des Zylinders 94 verschiebbar ist.

Darüber hinaus umfasst die dritte Fördereinheit 92 einen in Figur 16 lediglich schematisch dargestellten Aktor 98, mittels dem sich der Kolben 96 wahlweise entlang der Zylinderachse D verschieben lässt.

Dabei ist der Aktor 98 so ausgebildet, dass er den Kolben 96 aktiv in Richtung zum Bauraum 20 bewegen kann, wenn der Aktor 98 aktiviert ist. Ferner ist der Aktor 98 so ausgebildet, dass der Kolben 96 in einem deaktivierten Zustand des Aktors 98 passiv verschoben werden kann.

Darüber hinaus weist die Vorrichtung 10 eine Blockiereinheit 100 auf, mittels der der Kolben 96 festgestellt werden kann. Das bedeutet, dass eine Bewegung des Kolbens 96 mittels der Blockiereinheit 100 blockiert werden kann. Auch die Blockiereinheit 100 ist in Figur 16 lediglich schematisch dargestellt.

Die Vorrichtung 10 aus Figur 16 umfasst darüber hinaus einen vierten Behälter 102 für viertes Material, wobei der vierte Behälter 102 in gleicher Weise wie der erste Behälter 30 und der zweite Behälter 44 über einen vierten Kanal materialleitend mit dem Bauraum 20 verbunden ist.

Ferner umfasst die Vorrichtung eine vierte Fördereinheit 104, die dazu ausgebildet ist, viertes Material aus dem vierten Behälter 102 in den Bauraum 20 zu fördern.

In der dargestellten Ausführungsform ist der vierte Behälter 102 als Abschnitt eines Zylinders 106 mit im Wesentlichen rechteckiger Grundfläche gebildet.

Die vierte Fördereinheit 104 umfasst dabei einen Kolben 108, der abschnittsweise im Innenraum des Zylinders 106 aufgenommen ist und entlang einer Zylinderachse E des Zylinders 106 verschiebbar ist.

Darüber hinaus umfasst die vierte Fördereinheit 104 einen in Figur 16 lediglich schematisch dargestellten Aktor 110, mittels dem sich der Kolben 108 wahlweise entlang der Zylinderachse E verschieben lässt.

Dabei ist der Aktor 110 so ausgebildet, dass er den Kolben 108 aktiv in Richtung zum Bauraum 20 bewegen kann, wenn der Aktor 110 aktiviert ist. Ferner ist der Aktor 110 so ausgebildet, dass der Kolben 108 in einem deaktivierten Zustand des Aktors 110 passiv verschoben werden kann.

Darüber hinaus weist die Vorrichtung 10 eine Blockiereinheit 112 auf, mittels der der Kolben 108 festgestellt werden kann. Das bedeutet, dass eine Bewegung des Kolbens 108 mittels der Blockiereinheit 112 blockiert werden kann. Auch die Blockiereinheit 112 ist in Figur 16 lediglich schematisch dargestellt.

Die Vorrichtung 10 aus Figur 16 umfasst darüber hinaus einen fünften Behälter 114 für fünftes Material, wobei der fünfte Behälter 114 in gleicher Weise wie der erste Behälter 30 und der zweite Behälter 44 über einen fünften Kanal materialleitend mit dem Bauraum 20 verbunden ist.

Ferner umfasst die Vorrichtung eine fünfte Fördereinheit 116, die dazu ausgebildet ist, fünftes Material aus dem fünften Behälter 114 in den Bauraum 20 zu fördern.

In der dargestellten Ausführungsform ist der fünfte Behälter 114 als Abschnitt eines Zylinders 118 mit im Wesentlichen rechteckiger Grundfläche gebildet.

Die fünfte Fördereinheit 116 umfasst dabei einen Kolben 120, der abschnittsweise im Innenraum des Zylinders 118 aufgenommen ist und entlang einer Zylinderachse F des Zylinders 118 verschiebbar ist.

Darüber hinaus umfasst die fünfte Fördereinheit 116 einen in Figur 16 lediglich schematisch dargestellten Aktor 122, mittels dem sich der Kolben 120 wahlweise entlang der Zylinderachse F verschieben lässt.

Dabei ist der Aktor 122 so ausgebildet, dass er den Kolben 120 aktiv in Richtung zum Bauraum 20 bewegen kann, wenn der Aktor 122 aktiviert ist. Ferner ist der Aktor 122 so ausgebildet, dass der Kolben 120 in einem deaktivierten Zustand des Aktors 122 passiv verschoben werden kann.

Darüber hinaus weist die Vorrichtung 10 eine Blockiereinheit 124 auf, mittels der der Kolben 120 festgestellt werden kann. Das bedeutet, dass eine Bewegung des Kolbens 120 mittels der Blockiereinheit 124 blockiert werden kann. Auch die Blockiereinheit 124 ist in Figur 16 lediglich schematisch dargestellt.

Dabei lassen sich die zuvor anhand der Vorrichtung, die lediglich zwei Behälter und zwei Fördereinheit nur umfasst, erläuterten Verfahren auch mittels der Vorrichtung 10 aus Figur 16 ausführen. Die vorstehenden Erläuterungen können dabei auf jedes Paar aus erstem Material, zweitem Material, drittem Material, viertem Material und fünftem Material angewendet werden.

Es versteht sich, dass auch wenn in den vorstehenden Beispielen eine Herstellung einer Dentalrestauration im Detail erläutert wurde, die erfindungsgemäße Vorrichtung und die erfindungsgemäßen Verfahren grundsätzlich dazu geeignet sind, jede Art von Bauteil herzustellen. Die erfindungsgemäßen Verfahren und die erfindungsgemäße Vorrichtung sind also nicht auf die Herstellung von Dentalrestaurationen eingeschränkt.

Insbesondere kommen dabei Bauteile oder Anwendungen in Frage, bei denen Materialien, z. B. ein erstes Material und ein zweites Material, mit verschiedenen Eigenschaften kombiniert werden sollen. Beispielsweise lässt sich ein mechanisch leistungsfähiges Material mit einer thermischen Isolationsschicht kombinieren.

Weitere Beispiele für Bauteile, die mittels der erfindungsgemäßen Vorrichtung und des erfindungsgemäßen Verfahrens hergestellt werden können, sind patientenspezifische Prothesen. Derartige Bauteile können ein flexibles Material für den Komfort und ein robustes oder weniger flexibles Material für die Stabilität umfassen. Alternativ können derartige Bauteile ein flexibles Material für eine gewünschte Beweglichkeit und ein robustes oder weniger flexibles Material für die Stabilität oder Festigkeit umfassen. Das kann beispielsweise in Hüft- oder Knieprothesen angewendet werden.

Zusätzliche Beispiele für Bauteile, die mittels der erfindungsgemäßen Vorrichtung und des erfindungsgemäßen Verfahrens hergestellt werden können, sind patientenspezifische Implantate, z. B. Knochenimplantate, die ein biokompatibles Material und ein widerstandsfähigeres Material umfassen, um die Lebensdauer zu verlängern. Auch Dentalimplantate sind denkbar. Diese können z. B. ein Material umfassen, aus dem eine ästhetische Oberfläche geschaffen wird, und ein anderes Material, mittels dem eine Verankerung im Knochen realisiert wird.

Weitere Beispiele für Bauteile, die mittels der erfindungsgemäßen Vorrichtung und des erfindungsgemäßen Verfahrens hergestellt werden können, sind patientenspezifische Orthesen. Derartige Bauteile können ein weiches, hautfreundliches Material für den Tragekomfort und ein mechanisch stabiles Material für die gewünschte Stützfunktion umfassen.

Noch weitere Beispiele für Bauteile, die mittels der erfindungsgemäßen Vorrichtung und des erfindungsgemäßen Verfahrens hergestellt werden können, sind Phantome für die medizinische Bildgebung. Solche Bauteile ahmen biologisches Gewebe nach und können hierzu verschiedene Materialien umfassen. Auf diese Weise können präzise Bildgebungsergebnisse erreicht werden.

### Bezugszeichenliste

- 10: Vorrichtung zum schichtweisen Herstellen eines Bauteils
- 12: Bauteil
- 14: Dentalrestauration
- 16: Kernbereich
- 18: Schalenbereich
- 20: Bauraum
- 22: Zylinder
- 24: Bauplattform
- 26: Kolben
- 28: Aushärteeinheit
- 29: transparentes Wandelement
- 30: erster Behälter
- 32: erster Kanal
- 34: erste Fördereinheit
- 36: Zylinder
- 38: Kolben
- 40: Aktor
- 42: erste Blockiereinheit
- 44: zweiter Behälter
- 46: zweiter Kanal
- 48: zweite Fördereinheit
- 50: Zylinder
- 52: Kolben
- 54: Aktor
- 56: zweite Blockiereinheit
- 58: Aktor
- 60: dritte Blockiereinheit
- 62: zylindrisches Bauteil
- 64: Strömungsgeometrie
- 66: Trennelement
- 68: erster Sperrschieber
- 70: zweiter Sperrschieber
- 72: Überschussbehälter
- 74: Stopfen
- 88: Mischkontur
- 90: dritter Behälter
- 92: dritte Fördereinheit
- 94: Zylinder
- 96: Kolben
- 98: Aktor
- 100: Blockiereinheit
- 102: vierter Behälter
- 104: vierte Fördereinheit
- 106: Zylinder
- 108: Kolben
- 110: Aktor
- 112: Blockiereinheit
- 114: fünfter Behälter
- 116: fünfte Fördereinheit
- 118: Zylinder
- 120: Kolben
- 122: Aktor
- 124: Blockiereinheit

- A: Zylinderachse
- B: Zylinderachse
- C: Zylinderachse
- D: Zylinderachse
- E: Zylinderachse
- F: Zylinderachse
- H1: Rechteck, kennzeichnend einen ausgehärteten Bereich aus erstem Material
- H2: Rechteck, kennzeichnend einen ausgehärteten Bereich aus zweitem Material
- M1: erstes Material
- M2: zweites Material

## Patentansprüche

1. Vorrichtung (10) zum schichtweisen Herstellen eines Bauteils (12), insbesondere einer Dentalrestauration (14), wobei wenigstens eine Bauteilschicht sowohl ein erstes Material (M1), als auch ein zweites Material (M2) umfasst, oder wobei wenigstens eine Bauteilschicht aus dem ersten Material (M1) hergestellt ist und eine daran angrenzende weitere Bauteilschicht aus dem zweiten Material (M2) hergestellt ist, mit:
- einen Bauraum (20), der durch eine bewegungsantreibbare Bauplattform (24) und eine der Bauplattform (24) gegenüberliegende Aushärteeinheit (28) begrenzt ist, wobei die Aushärteeinheit (28) dazu ausgebildet ist, im Bauraum (20) vorliegendes erstes Material (M1) und/oder zweites Material (M2) auszuhärten,
- einen ersten Behälter (30) für erstes Material (M1), der materialleitend mit dem Bauraum (20) verbunden ist,
- eine erste Fördereinheit (34) zum Fördern von erstem Material (M1) aus dem ersten Behälter (30) in den Bauraum (20),
- einen zweiten Behälter (44) für zweites Material (M2), der materialleitend mit dem Bauraum (20) verbunden ist,
- eine zweite Fördereinheit (48) zum Fördern von zweitem Material (M2) aus dem zweiten Behälter (44) in den Bauraum (20),
wobei die erste Fördereinheit (34) und die zweite Fördereinheit (48) zumindest zeitweise invers bewegungsgekoppelt sind und die Bewegungskopplung mechanisch und/oder steuerungstechnisch ist.

2. Vorrichtung (10) nach Anspruch 1, ferner umfassend eine Mischkontur (88) zum Mischen des ersten Materials (M1) und/oder des zweiten Materials (M2), wobei die Mischkontur (88) innerhalb des Bauraums (20) oder angrenzend and den Bauraum (20) angeordnet ist.

3. Vorrichtung (10) nach einem der vorhergehenden Ansprüche, ferner umfassend ein Trennelement (66) zum Getrennthalten von erstem Material (M1) und zweitem Material (M2).

4. Vorrichtung (10) nach einem der vorhergehenden Ansprüche, wobei der erste Behälter (30) durch einen Innenraum eines Zylinders (36) gebildet ist und wobei die erste Fördereinheit (34) einen Kolben (38) umfasst, der zumindest abschnittsweise im Innenraum des Zylinders (36) aufgenommen und im Innenraum verschiebbar ist, und/oder
wobei der zweite Behälter (44) durch einen Innenraum eines Zylinders (50) gebildet ist und wobei die zweite Fördereinheit (48) einen Kolben (52) umfasst, der zumindest abschnittsweise im Innenraum des Zylinders (50) aufgenommen und im Innenraum verschiebbar ist.

5. Vorrichtung (10) nach einem der vorhergehenden Ansprüche,
wobei die Bewegungskopplung hydromechanisch über das erste Material (M1) und/oder über das zweite Material (M2) ist, oder
wobei die erste Fördereinheit (34) und die zweite Fördereinheit (48) mechanisch gekoppelt sind, oder
wobei die erste Fördereinheit (34) und die zweite Fördereinheit (48) mechanisch separat voneinander sind und steuerungstechnisch gekoppelt sind.

6. Vorrichtung (10) nach Anspruch 5, wobei die Bauplattform (24), die erste Fördereinheit (34) und die zweite Fördereinheit (48) selektiv und einzeln feststellbar sind, um jeweils zwei aus Bauplattform (24), erster Fördereinheit (34) und zweiter Fördereinheit (48) über das erste Material (M1) und/oder über das zweite Material (M2) hydromechanisch bewegungszukoppeln.

7. Vorrichtung (10) nach einem der vorhergehenden Ansprüche, wobei die Bauplattform (24) als Endfläche eines in einem Zylinder (22) geführten Kolbens (26) ausgebildet ist.

8. Vorrichtung (10) nach einem der vorhergehenden Ansprüche, ferner umfassend einen Überschussbehälter (72) zur Aufnahme von überschüssigem ersten Material (M1) und/oder überschüssigem zweiten Material (M2), wobei der Überschussbehälter (72) materialleitend mit dem Bauraum (20) verbunden ist.

9. Verfahren zum schichtweisen Herstellen eines Bauteils (12), insbesondere einer Dentalrestauration (14), wobei wenigstens eine Bauteilschicht sowohl ein erstes Material (M1), als auch ein zweites Material (M2) umfasst, umfassend:
- Vorsehen einer Schicht aus unausgehärtetem ersten Material (M1) und Aushärten zumindest eines Abschnitts der Schicht, sodass die Schicht einen Bereich aus gehärtetem ersten Material (M1) und einen Bereich aus unausgehärtetem ersten Material (M1) umfasst,
- Ersetzen des unausgehärteten ersten Materials (M1) in der Schicht durch unausgehärtetes zweites Material (M2), sodass die Schicht einen Bereich aus gehärtetem ersten Material (M1) und einen Bereich aus unausgehärtetem zweiten Material (M2) umfasst, und
- Aushärten zumindest eines Abschnitts der Schicht, welcher zweites Material (M2) umfasst, sodass die Schicht einen Bereich aus gehärtetem ersten Material (M1), einen Bereich aus gehärtetem zweiten Material (M2), und einen Bereich aus unausgehärtetem zweiten Material (M2) umfasst.

10. Verfahren nach Anspruch 9, wobei das Ersetzen des unausgehärteten ersten Materials (M1) in der Schicht durch unausgehärtetes zweites Material (M2) durch Verdrängen des unausgehärteten ersten Materials (M1) mittels unausgehärtetem zweitem Material (M2) erfolgt.

11. Verfahren nach Anspruch 9 oder 10, ferner umfassend
Herstellen einer Strömungsgeometrie (64) für erstes Material (M1) durch lokales Aushärten von zweitem Material (M2) und/oder Herstellen einer Strömungsgeometrie (64) für zweites Material (M2) durch lokales Aushärten von erstem Material (M1) und/oder umströmen einer Strömungsgeometrie mit unausgehärtetem ersten Material (M1) und/oder unausgehärtetem zweiten Material (M2).

12. Verfahren nach Anspruch 11, wobei die Strömungsgeometrie (64) für erstes Material (M1) einen Bereich, in dem erstes Material (M1) auszuhärten ist, zumindest abschnittsweise begrenzt und/oder einen Strömungskanal für erstes Material (M1) umfasst und/oder
wobei die Strömungsgeometrie (64) für zweites Material (M2) einen Bereich, in dem zweites Material (M2) auszuhärten ist, zumindest abschnittsweise begrenzt und/oder einen Strömungskanal für zweites Material (M2) umfasst.

13. Verfahren nach einem der Ansprüche 9 bis 12, ferner umfassend Entfernen von überschüssigem unausgehärteten ersten Material (M1) und/oder überschüssigem unausgehärteten zweiten Material (M2).

14. Verfahren zum schichtweisen Herstellen eines Bauteils (12), insbesondere einer Dentalrestauration (14), wobei wenigstens eine Bauteilschicht sowohl ein erstes Material (M1), als auch ein zweites Material (M2) umfasst, umfassend:
- Vorsehen von unausgehärtetem ersten Material (M1) und unausgehärtetem zweiten Material (M2) innerhalb einer Schicht,
- Mischen des unausgehärteten ersten Materials (M1) und des unausgehärteten zweiten Materials (M2) innerhalb der Schicht, und
- Aushärten zumindest eines Abschnitts der Mischung aus unausgehärtetem erstem Material (M1) und unausgehärtetem zweiten Material (M2) innerhalb der Schicht.

15. Verfahren nach Anspruch 14, wobei das Mischen des unausgehärteten ersten Materials (M1) und des unausgehärteten zweiten Materials (M2) durch Bewegen einer zwischen dem unausgehärteten ersten Material (M1) und dem unausgehärteten zweiten Material (M2) vorliegenden Kontaktfläche innerhalb der Schicht erfolgt.
